# EUROPÄISCHE PATENTSCHRIFT

(11) **EP 3 850 650 B1**
(45) Veröffentlichungstag und Bekanntmachung des Hinweises auf die Patenterteilung: **15.11.2023**
(21) Anmeldenummer: 19768761.9
(22) Anmeldetag: 10.09.2019
(51) Int. Cl.: H01H 13/85

(54) **TASTENMODUL FÜR EINE TASTATUR, TASTATUR UND VERFAHREN ZUM VERSEHEN EINES TASTENSTÖSSELS MIT EINEM DRAHTBÜGEL**
KEY MODULE FOR A KEYBOARD, KEYBOARD, AND METHOD FOR PROVIDING A KEY LIFTER WITH A WIRE CLAMP
MODULE TOUCHE POUR UN CLAVIER, CLAVIER ET PROCÉDÉ POUR MUNIR UNE TIGE-POUSSOIR DE TOUCHE D'UN ÉTRIER EN FIL DE FER

(30) Priorität: 13.09.2018 DE 102018122416; 05.04.2019 DE 102019108956
(43) Veröffentlichungstag der Anmeldung: 21.07.2021
(73) Patentinhaber: Cherry Europe GmbH, 91275 Auerbach / Opf (DE)
(72) Erfinder: RUFF, Eduard, 91275 Auerbach (DE)
(74) Vertreter: Aurigium Leischner & Luthe
(86) Internationale Anmeldenummer: PCT/EP2019/074043
(87) Internationale Veröffentlichungsnummer: WO 2020/053179

(56) Entgegenhaltungen:
- DE-A1-102014 208 173
- TW-B- I 632 576
- US-A- 5 015 811
- US-A1- 2018 074 587

## Beschreibung

Die vorliegende Erfindung bezieht sich auf ein Tastenmodul für eine Tastatur, auf eine Tastatur mit mindestens einem solchen Tastenmodul und auf ein Verfahren zum Versehen eines Tastenstößels eines Tastenmoduls für eine Tastatur mit einem Drahtbügel zum Bereitstellen einer taktilen und/oder akustischen Rückkopplung.

Bei Tastaturen, wie sie beispielsweise im Zusammenhang mit Computern eingesetzt werden, können unterschiedliche Arten von Tastenschaltern zum Einsatz kommen. Insbesondere können mechanische Tastenmodule als Tastenschalter verwendet werden. Es gibt unterschiedliche Arten von mechanischen Tastenmodulen. In der nachveröffentlichten DE 10 2017 106 406 A1 ist ein Tastenmodul mit einem Deckelelement, einem Stößel, einer Kontaktgebereinheit, einem Kontaktstück und einem Gehäuseelement beschrieben. Eine Rückkopplung hinsichtlich einer Betätigung solcher Tastenschalter bzw. Tastenmodule kann taktil und zusätzlich oder alternativ akustisch erfolgen.

Die TW I 632 576 B offenbart einen Druckknopfschalter mit einstellbarer taktiler Rückkopplung, wobei der Schalter eine an einem Gehäusesockel befestigte Schenkelfeder zum Bereitstellen der taktilen Rückkopplung aufweist. In der US 5 015 811 A ist ein Druckknopf-Schnappschalter mit einstellbaren Klick-Geräuschpegel gezeigt, wobei das Klick-Geräusch durch eine am Gehäuse angebrachte Tellerfeder erzeugbar ist. Die DE 10 2014 208 173 A1 offenbart Einrichtungen, Anordnungen und Verfahren zum berührungslosen Erfassen eines Tastenknopfhubes, wobei wieder akustische noch taktile Rückkopplung erwähnt sind.

Vor diesem Hintergrund schafft die vorliegende Erfindung ein verbessertes Tastenmodul für eine Tastatur, eine verbesserte Tastatur und ein verbessertes Verfahren zum Versehen eines Tastenstößels eines Tastenmoduls für eine Tastatur mit einem Drahtbügel zum Bereitstellen einer taktilen und/oder akustischen Rückkopplung gemäß den Hauptansprüchen. Vorteilhafte Ausgestaltungen ergeben sich aus den Unteransprüchen und der nachfolgenden Beschreibung.

Gemäß Ausführungsformen des hier beschriebenen Ansatzes kann insbesondere ein Tastenmodul mit taktiler Rückkopplung oder mit taktiler und akustischer Rückkopplung bei Betätigung geschaffen werden. Die Rückkopplung kann hierbei durch einen Drahtbügel bereitgestellt werden. Der Drahtbügel kann ausgebildet sein, um die taktile Rückkopplung oder taktile und akustische Rückkopplung für das Tastenmodul bereitzustellen. Dabei kann der Drahtbügel ausschließlich oder vollständig in einer beweglichen Komponente des Tastenmoduls, genauer gesagt in einem Tastenstößel des Tastenmoduls angeordnet sein. Der Drahtbügel kann gebogen sein und beispielsweise zumindest eine Biegestelle aufweisen, wobei ein Gesamtbiegewinkel aller Biegestellen des Drahtbügels weniger als 360 Grad beträgt. Vorteilhafterweise kann somit insbesondere ein haptisch bzw. taktil spürbares Klicken als taktile Rückkopplung und optional zusätzlich ein akustisch wahrnehmbares Klicken als akustische Rückkopplung mittels lediglich des Drahtbügels auf zuverlässige Weise bereitgestellt werden. Dabei kann der Drahtbügel einfach und kostengünstig hergestellt werden. Der Drahtbügel kann zudem platzsparend in dem Tastenmodul aufgenommen sein. Ferner kann somit auch ein einfaches Herstellungsverfahren des Tastenmoduls, insbesondere auch hinsichtlich der Fertigung des Tastenstößels und des Einbringens des Drahtbügels ermöglicht werden. Auch kann der Drahtbügel einen Kraft-Weg-Verlauf bei einer Betätigung des Tastenmoduls auf definierte Weise beeinflussen. Der Drahtbügel kann insbesondere verglichen mit einer Schenkelfeder oder Torsionsfeder die taktile und optional zusätzlich akustische Rückkopplung auf kostengünstige, platzsparende und einfache Weise bereitstellen, da ein ansonsten aufwendiges Gehäuse für einen Federkörper, insbesondere einen Windungsteil, vereinfacht werden kann, da eine ansonsten erforderliche feste Einspannung eines Schenkels einer Schenkelfeder oder Torsionsfeder entfallen kann, und da der Drahtbügel direkt gebogen und in den Tastenstößel eingebaut bzw. während des Einbaus in seine endgültige Form gebogen werden kann und somit in einem einzigen Vorgang der Tastenstößel mit dem Drahtbügel versehen werden kann, anstatt in einem separaten Vorgang gefertigt oder aufwendig in einen Schaltermontage-Automaten zugeführt zu werden. Es wird ein Tastenmodul für eine Tastatur vorgestellt, wobei das Tastenmodul die Merkmale des Anspruchs 1 aufweist.

Die Tastatur kann beispielsweise für einen Computer oder dergleichen vorgesehen sein. Die Tastatur kann zumindest ein Tastenmodul aufweisen. Das Tastenmodul kann Teil einer Taste sein oder eine Taste repräsentieren. Somit kann ein Tastenmodul pro Taste vorgesehen sein. Das Tastenmodul kann auch als ein mechanischer Taster oder mechanischer Tastenschalter bezeichnet werden. Der Tastenstößel kann einstückig ausgeformt sein. Das elastische Mittel kann als eine Druckfeder ausgeführt sein. Das elastische Mittel kann als eine Rückstellfeder für das Tastenmodul fungieren. Das elastische Mittel kann einen linearen Kraft-Weg-Verlauf bei der Betätigungsbewegung bewirken. Anders ausgedrückt kann das elastische Mittel eine lineare Federkennlinie aufweisen. Alternativ kann das elastische Mittel eine progressive Federkennlinie aufweisen. Der Drahtbügel kann aus einem Metalldraht mit einem vordefinierten Durchmesser gebogen sein. Der Drahtbügel kann ausgebildet sein, um die taktile und/oder akustische Rückkopplung im Verlauf der Betätigungsbewegung bereitzustellen. Der Gesamtbiegewinkel kann einer Summe von Biegewinkeln aller Biegestellen des Drahtbügels entsprechen, an denen der Drahtbügel gebogen ist. Der Drahtbügel kann auch als ein Bügel, Klickbügel oder allgemein als elastisches Mittel bezeichnet werden. Der Drahtbügel kann aus einem Metalldraht oder einem Kunststoffdraht ausgeformt sein.

In einem unausgelenkten Zustand des Drahtbügels kann der Drahtbügel in dem zweiten Biegebereich zwischen 80 und 100 Grad gebogen sein. Der erste Biegebereich kann zwischen einem an dem Tastenstößel fixierten Ende des Drahtbügels und einem ersten geraden Abschnitt des Drahtbügels angeordnet sein. Der zweite Biegebereich kann zwischen dem ersten geraden Abschnitt und einem zweiten geraden Abschnitt des Drahtbügels angeordnet sein. Dabei kann der zweite gerade Abschnitt länger als der erste gerade Abschnitt sein. Der zweite gerade Abschnitt kann zwischen dem zweiten Biegebereich und einem freien Ende des Drahtbügels angeordnet sein. Der zweite gerade Abschnitt und das freie Ende des Drahtbügels können im Verlauf der Betätigungsbewegung relativ zu dem ersten geraden Abschnitt elastisch auslenkbar sein. Das an dem Tastenstößel fixierte Ende, der erste Biegebereich, der erste gerade Abschnitt und zumindest ein Teilabschnitt des zweiten Biegebereichs des Drahtbügels können an dem Tastenstößel fixiert sein. Eine solche Ausführungsform bietet den Vorteil, dass die Einrichtung für taktile und zusätzlich oder alternativ akustische Rückkopplung in Gestalt des Drahtbügels platzsparend realisiert sowie einfach und kostengünstig hergestellt werden kann.

Ferner kann der Tastenstößel einen Fixierabschnitt zum Fixieren des Drahtbügels an dem Tastenstößel aufweisen. Hierbei kann der Fixierabschnitt zwei Lagerkerben zum Lagern des Drahtbügels aufweisen. Jede der Lagerkerben kann einen Winkel von weniger als 180 Grad aufspannen. Das an dem Tastenstößel fixierte Ende, der erste Biegebereich, der erste gerade Abschnitt und zumindest ein Teilabschnitt des zweiten Biegebereichs des Drahtbügels können in dem Fixierabschnitt angeordnet sein. Dabei kann das an dem Tastenstößel fixierte Ende in einer ersten der Lagerkerben gelagert sein und kann der erste gerade Abschnitt in einer zweiten der Lagerkerben gelagert sein. Das an dem Tastenstößel fixierte Ende des Drahtbügels kann der ersten Lagerkerbe verkantet sein. Der Drahtbügel kann in den Fixierabschnitt einpressbar, einschiebbar oder einsetzbar sein. Somit kann der Fixierabschnitt als ein Einschubfach für den Drahtbügel fungieren. Eine solche Ausführungsform bietet den Vorteil, dass der Drahtbügel einfach, stabil, zuverlässig und verdrehsicher fixiert werden kann. Zudem können Drahtbügel aus Draht mit unterschiedlichem Durchmesser durch die Lagerkerben sicher gelagert werden.

Insbesondere kann der Drahtbügel in einem Teilabschnitt widerhakenartig ausgeformt sein. Zusätzlich oder alternativ kann der Drahtbügel an einem an dem Tastenstößel fixierten Ende des Drahtbügels eine scharfe Kante aufweisen. Der widerhakenartige Teilabschnitt kann das an dem Tastenstößel fixierte Ende des Drahtbügels, den ersten Biegeabschnitt und den ersten geraden Abschnitt des Drahtbügels aufweisen. Die scharfe Kante, und somit der widerhakenartige oder widerhakenförmige Teilabschnitt und zusätzlich oder alternativ das fixierte Ende, kann ausgebildet sein, um sich in den Tastenstößel, insbesondere in den Fixierabschnitt, einzugraben, zu bohren bzw. zu schneiden. So kann ein sicherer Halt des Drahtbügels in dem Tastenstößel, insbesondere in dem Fixierabschnitt erreicht werden, da sich der Drahtbügel stabil verkeilen kann. Durch die widerhakenartige Form und zusätzlich oder alternativ das scharfe Ende des Drahtbügels kann eine robuste und zuverlässige Sicherung gegen eine Positionsänderung, insbesondere gegen ein Herausfallen des Drahtbügels aus dem Tastenstößel erreicht werden.

Auch kann der Tastenstößel eine schräg zu einer Achse der Betätigungsbewegung geneigte Schrägfläche aufweisen. Hierbei kann das Modulgehäuse eine schräg zu der Achse der Betätigungsbewegung geneigte Rippe mit einer Nase und einer normal zu der Achse der Betätigungsbewegung geneigten Anlagefläche aufweisen. Die Schrägfläche, die Rippe, die Anlagefläche und die Nase können ausgeformt sein, um den Drahtbügel im Verlauf der Betätigungsbewegung elastisch auszulenken und ruckartig freizugeben. Eine solche Ausführungsform bietet den Vorteil, dass die taktile Rückkopplung auf einfache und robuste Weise bereitgestellt werden kann. Hierbei kann die taktile Rückkopplung aufgrund der Fixierung des Drahtbügels in dem Tastenstößel direkt über eine an demselben angekoppelte Tastenkappe auf einen Benutzer übertragen werden.

Zudem kann der Tastenstößel einen Vorsprungsabschnitt mit einer normal zu einer Achse der Betätigungsbewegung geneigten Anschlagfläche aufweisen. Die Anschlagfläche und der Drahtbügel können ausgeformt und angeordnet sein, um für die akustische und zusätzlich oder alternativ taktile Rückkopplung im Verlauf der Betätigungsbewegung einen Aufprall des Drahtbügels an der Anschlagfläche zu bewirken. Eine solche Ausführungsform bietet den Vorteil, dass die akustische Rückkopplung in Form eines Klickgeräusches auf einfache und zuverlässige Weise bereitgestellt werden kann. Durch geeignete Wahl eines Durchmessers eines Drahtes des Drahtbügels kann eine Eigenschaft der akustischen Rückkopplung eingestellt werden.

Auch kann der Tastenstößel einen Rückhalteabschnitt zum Rückhalten des Drahtbügels gegen eine Bewegung weg von einer Wand des Tastenstößels und zusätzlich oder alternativ zum Rückhalten des Drahtbügels gegen eine Bewegung quer zu einer Achse der Betätigungsbewegung des Tastenstößels im Verlauf der Betätigungsbewegung aufweisen. Der Rückhalteabschnitt kann in Gestalt eines Vorsprungs oder Führungsvorsprungs ausgeformt sein. Ein Teilabschnitt des Drahtbügels kann zwischen dem Rückhalteabschnitt und der Wand des Tastenstößels aufgenommen oder aufnehmbar sein. Genauer gesagt kann ein Teilabschnitt des zweiten geraden Abschnitts benachbart zu dem zweiten Biegebereich des Drahtbügels zwischen dem Rückhalteabschnitt und der Wand des Tastenstößels aufgenommen oder aufnehmbar sein. Der Rückhalteabschnitt kann ausgeformt und angeordnet sein, um in Zusammenwirkung mit der Schrägfläche und der Rippe eine Rückführung des freien Endes des Drahtbügels auf die Anschlagfläche des Vorsprungsabschnitts des Tastenstößels nach der Betätigungsbewegung zu bewirken. Eine solche Ausführungsform bietet den Vorteil, dass die elastische Auslenkung des Tastenstößels im Verlauf der Betätigungsbewegung exakt wiederholbar und zuverlässig realisiert werden kann. Insbesondere kann ein sicher reproduzierbares Klick-Geräusch erreicht werden.

Gemäß einer Ausführungsform kann das Modulgehäuse einstückig ausgeformt sein. Das Modulgehäuse kann zumindest einen Positioniervorsprung zum Positionieren des Tastenmoduls an einem Schaltungssubstrat der Tastatur aufweisen. Das Modulgehäuse kann zumindest einen Befestigungsabschnitt zum formschlüssigen und zusätzlich oder alternativ kraftschlüssigen Befestigen des Tastenmoduls in der Tastatur aufweisen. Der Positioniervorsprung kann in Gestalt eines Zapfens, Stiftes oder dergleichen ausgeformt sein. Das Schaltungssubstrat kann als eine Leiterplatte ausgeführt sein. Der Befestigungsabschnitt kann in Gestalt eines Kragens und zusätzlich oder alternativ eines Schnapphakens oder dergleichen ausgeformt sein.

Hierbei kann das Tastenmodul unter Vermeidung einer stoffschlüssigen Verbindung zwischen dem Tastenmodul und dem Schaltungssubstrat der Tastatur mit dem Schaltungssubstrat verbunden sein oder werden. Eine solche Ausführungsform bietet den Vorteil, dass eine lötfreie Verbindung zwischen dem Tastenmodul und dem Schaltungssubstrat kostensparend realisiert werden kann. Auch können Kosten gespart werden, da eine breitere Materialauswahl mit auch weniger temperaturbeständigen Materialien für das Tastenmodul je nach Einsatzumgebungstemperatur genutzt werden kann. Außerdem bietet eine lötfreie Verbindung einen einfachen Austausch von Tastenmodulen durch einen Fachmann oder durch den Endbenutzer direkt. Das eröffnet eine zusätzliche individuelle Tastatur-Gestaltungsmöglichkeit, die insbesondere bei Computerspiel-Nutzern vorteilhaft sein kann.

Ferner kann der Tastenstößel zumindest einen Führungsabschnitt zum Führen einer translatorischen Betätigungsbewegung des Tastenstößels aufweisen. Der zumindest eine Führungsabschnitt des Tastenstößels kann einen Mantelabschnitt des Tastenstößels aufweisen. Zusätzlich oder alternativ kann der zumindest eine Führungsabschnitt des Tastenstößels einen Führungszapfen aufweisen, der ausgeformt ist, um bei der Betätigungsbewegung in eine den Positioniervorsprung aufweisende Ausbuchtung des Modulgehäuses einzutauchen. In der Ruheposition kann der Tastenstößel teilweise in dem Modulgehäuse aufgenommen sein. In der Betätigungsposition kann der Tastenstößel vollständig oder mit Ausnahme eines Endabschnittes des Kopplungsabschnittes vollständig in dem Modulgehäuse aufgenommen sein. Eine solche Ausführungsform bietet den Vorteil, dass eine gleitende Betätigungsbewegung des Tastenstößels relativ zu dem Modulgehäuse mit zuverlässiger Führung des Tastenstößels in dem Modulgehäuse ermöglicht werden kann.

Auch kann der Tastenstößel zumindest einen Stößelanschlag zum Begrenzen der Betätigungsbewegung aufweisen. Das Modulgehäuse kann zumindest einen Gehäuseanschlag zur Anlage gegen den zumindest einen Stößelanschlag des Tastenstößels in der Ruheposition des Tastenstößels aufweisen. Der Stößelanschlag und der Gehäuseanschlag können ausgeformt sein, um eine Rastverbindung bzw.

Schnappverbindung zwischen dem Tastenstößel und dem Modulgehäuse zu ermöglichen, um den Tastenstößel in dem Modulgehäuse zu halten. Der Tastenstößel kann auch ein elastisches Mittel aufweisen. Das elastische Mittel kann ausgebildet sein, um in einem zusammengesetzten Zustand des Tastenmoduls den Tastenstößel in die Ruheposition vorzuspannen. Eine solche Ausführungsform bietet den Vorteil, dass eine zuverlässige Definition der Betätigungsbewegung sowie eine robuste Verbindung zwischen dem Tastenstößel und dem Modulgehäuse ermöglicht werden können.

Zudem kann der Tastenstößel aus einem lichtdurchlässigen Material oder einem lichtundurchlässigen Material ausgeformt sein. Hierbei kann das Modulgehäuse aus einem lichtdurchlässigen Material oder einem lichtundurchlässigen Material ausgeformt sein. Eine solche Ausführungsform bietet den Vorteil, dass eine gleichmäßige Beleuchtung einer mit dem Tastenstößel koppelbaren Tastenkappe von dem Schaltungssubstrat aus erreicht werden kann. Auch kann eine Beleuchtung des gesamten Modulgehäuses und somit einer Umgebung der Tastenkappe bei Bedarf ermöglicht werden.

Gemäß einer Ausführungsform kann das Tastenmodul ein Auslöseelement zum Auslösen eines Schaltsignals des Tastenmoduls ansprechend auf die Betätigungsbewegung aufweisen. Hierbei kann das Auslöseelement an dem Tastenstößel angebracht sein. Das Auslöseelement kann als ein Kontaktgeber zum elektrischen Kurzschließen von Kontaktflächen des Schaltungssubstrats der Tastatur ausgeführt sein. Hierbei kann das Auslöseelement mindestens einen im Verlauf der Betätigungsbewegung elastisch verformbaren Kontaktfinger zum Berühren der Kontaktflächen unter Erzeugung von Reibung und einen Anbringungsabschnitt zum Anbringen des Auslöseelements an dem Tastenstößel aufweisen. Der Kontaktgeber kann einstückig ausgeformt sein. Zumindest der mindestens eine Kontaktfinger kann hierbei aus einem elektrisch leitfähigen Material ausgeformt sein. Insbesondere kann der Kontaktgeber einstückig als ein Stanz- und Biegeteil aus einem Metallmaterial ausgeformt sein. Der mindestens eine Kontaktfinger kann bei einer Verformung eine lineare oder progressive Federkennlinie aufweisen. In der Ruheposition kann der mindestens eine Kontaktfinger von dem Schaltungssubstrat beabstandet angeordnet sein. In der Betätigungsposition kann der mindestens eine Kontaktfinger die Kontaktflächen des Schaltungssubstrats berühren. Insbesondere kann der Kontaktgeber zwei Kontaktfinger aufweisen, wobei die zwei Kontaktfinger nochmals geschlitzt sein können, sodass insgesamt vier Kontaktfinger vorgesehen sind. Eine solche Ausführungsform bietet den Vorteil, dass eine Kontaktsicherheit erhöht werden kann und somit ein Schaltsignal des Tastenmoduls zuverlässig und wiederholbar bereitgestellt werden kann. Auch kann durch eine Kombination einer Federkraft des elastischen Elements sowie einer Federkraft des mindestens einen Kontaktfingers bei der Betätigungsbewegung des Tastenmoduls insgesamt ein nichtlinearer Kraft-Weg-Verlauf erreicht werden.

Insbesondere kann der Tastenstößel einen Mantelabschnitt aufweisen, der als ein Mehrkantrohr ausgeformt ist. Hierbei kann in einem von dem Mantelabschnitt umschlossenen Bereich ein Zwischenboden ausgeformt sein. Von dem Zwischenboden aus kann sich der Kopplungsabschnitt in eine erste Richtung teilweise aus dem Mantelabschnitt heraus erstrecken. Von dem Zwischenboden aus kann sich ein Führungszapfen als Führungsabschnitt in eine zu der ersten Richtung entgegengesetzte zweite Richtung teilweise aus dem Mantelabschnitt heraus erstrecken. Somit können der Kopplungsabschnitt und der Führungszapfen an voneinander abgewandten Seiten des Zwischenbodens angeordnet sein. Der Mantelabschnitt kann als ein Vierkantrohr mit angefasten Kanten ausgeführt sein. Der Stößelanschlag kann an dem Mantelabschnitt ausgeformt sein. Ein Anteil einer Abmessung des Mantelabschnitts bezogen auf eine Abmessung des Tastenmoduls entlang einer Achse der Betätigungsbewegung kann beispielsweise mehr als 75 Prozent, mehr als 80 Prozent, mehr als 85 Prozent oder mehr als 90 Prozent betragen. Eine solche Ausführungsform bietet den Vorteil, dass eine zuverlässige und stabile Führung des Tastenstößels in dem Modulgehäuse mit einer Verdrehsicherung und einer Verkantungssicherheit erreicht werden kann.

Gemäß einer Ausführungsform kann hierbei das Modulgehäuse eine Anlagefläche aufweisen. Dabei kann das Auslöseelement in der Ruheposition des Tastenstößels in Anlage gegen die Anlagefläche angeordnet sein. Die Anlagefläche kann wenigstens derart ausgebildet sein, dass ein Abgleiten des Auslöseelements und somit des Tastenstößels zurück in eine Position vor erstmaliger Betätigung verhindert werden kann. Eine solche Ausführungsform bietet den Vorteil, dass ein Nachschwingen des Auslöseelements nach einer Rückkehr von der Betätigungsposition in die Ruheposition gedämpft werden kann.

Es wird auch eine Tastatur vorgestellt, wobei die Tastatur die Merkmale des Anspruchs 13 aufweist.

Gemäß einer Ausführungsform kann das Schaltungssubstrat zumindest ein Loch aufweisen, in das der zumindest eine Positioniervorsprung des Modulgehäuses des zumindest einen Tastenmoduls eingebracht ist. Hierbei kann insbesondere eine formschlüssige Verbindung zwischen dem Tastenmodul und dem Schaltungssubstrat erreicht werden. Eine solche Ausführungsform bietet den Vorteil, dass eine einfache und genaue Positionierung des Tastenmoduls relativ zu dem Schaltungssubstrat erreicht werden kann. Zusätzlich oder alternativ können das zumindest eine Tastenmodul und das Schaltungssubstrat ausschließlich formschlüssig und zusätzlich oder alternativ kraftschlüssig miteinander verbunden sein. Die formschlüssige und zusätzlich oder alternativ kraftschlüssige Verbindung zwischen Tastenmodul und Schaltungssubstrat kann mittels des zumindest einen Positioniervorsprungs und zumindest eines Befestigungsabschnitts des Modulgehäuses hergestellt sein. Eine solche Ausführungsform bietet den Vorteil, dass eine zuverlässige, kostengünstige und auf einfache Weise zum Austausch lösbare Verbindung realisiert werden kann.

Auch kann oder können an oder in dem Schaltungssubstrat zumindest eine Leuchtdiode zum Beleuchten des zumindest einen Tastenmoduls und zusätzlich oder alternativ weitere elektronische Bauteile. Ebenfalls können an oder in dem Schaltungssubstrat bei einer Betätigung des zumindest einen Tastenmoduls miteinander elektrisch verbindbare Kontaktflächen angeordnet sein. Die zumindest eine Leuchtdiode und zusätzlich oder alternativ die weiteren elektronischen Bauteile können mittels eines Oberflächenbefestigungsprozesses oder eines Lötverfahrens aufgebracht sein. Bei den weiteren elektronischen Bauteilen kann es sich um Widerstände, Dioden und dergleichen handeln. Eine solche Ausführungsform bietet den Vorteil, dass das Tastenmodul frei von Elektronik gehalten werden kann. Ferner kann eine einfache Beleuchtung des Tastenmoduls bzw. der Taste erreicht werden.

Ferner kann die Tastatur ein Fixierelement zum Fixieren des zumindest einen Tastenmoduls an dem Schaltungssubstrat aufweisen. Hierbei kann das Fixierelement als ein Tastenrahmen zwischen dem Schaltungssubstrat und einem Tastaturoberteil oder als ein Tastaturoberteil ausgeführt sein. Das Fixierelement kann ausgebildet sein, um mit zumindest einem Befestigungsabschnitt des Modulgehäuses des Tastenmoduls eine formschlüssige und zusätzlich oder alternativ kraftschlüssige Verbindung einzugehen. Eine solche Ausführungsform bietet den Vorteil, dass eine Tastatur auf kostengünstige Weise realisiert werden kann, wobei langlebige und robuste Tastenmodule auf einfache Weise ausgetauscht werden können und eine präzise Betätigung ermöglichen.

Die Erfindung wird anhand der beigefügten Zeichnungen beispielhaft näher erläutert. Es zeigen:
Fig. 1 eine schematische Darstellung einer Tastatur gemäß einem Ausführungsbeispiel der vorliegenden Erfindung;
Fig. 2 eine teilweise auseinandergezogene Darstellung eines Teilabschnitts einer Tastatur gemäß einem Ausführungsbeispiel der vorliegenden Erfindung;
Fig. 3 eine auseinandergezogene Darstellung des Tastenmoduls aus Fig. 2;
Fig. 4 eine Unteransicht eines Tastenmoduls aus Fig. 2 bzw. Fig. 3;
Fig. 5 eine schematische Darstellung eines Tastenmoduls gemäß einem Ausführungsbeispiel der vorliegenden Erfindung;
Fig. 6 eine schematische Schnittdarstellung des Fixierabschnitts aus Fig. 5;
Fig. 7 eine schematische Darstellung eines Tastenmoduls gemäß einem Ausführungsbeispiel der vorliegenden Erfindung in einer Ruheposition;
Fig. 8 eine schematische Darstellung des Tastenmoduls aus Fig. 7 im Verlauf einer Betätigungsbewegung;
Fig. 9 eine schematische Darstellung des Tastenmoduls aus Fig. 7 bzw. Fig. 8 in einer Betätigungsposition;
Fig. 10 ein Ablaufdiagramm eines Verfahrens gemäß einem Ausführungsbeispiel der vorliegenden Erfindung
Fig. 11 eine schematische Unteransicht eines Teilabschnitts eines Tastenmoduls gemäß einem Ausführungsbeispiel der vorliegenden Erfindung;
Fig. 12 eine teilweise geschnittene Ansicht eines Teilabschnitts einer Tastatur gemäß einem Ausführungsbeispiel der vorliegenden Erfindung mit einem Tastenmodul vor einer Montage bzw. Erstbetätigung;
Fig. 13 eine teilweise geschnittene Ansicht des Teilabschnitts der Tastatur aus

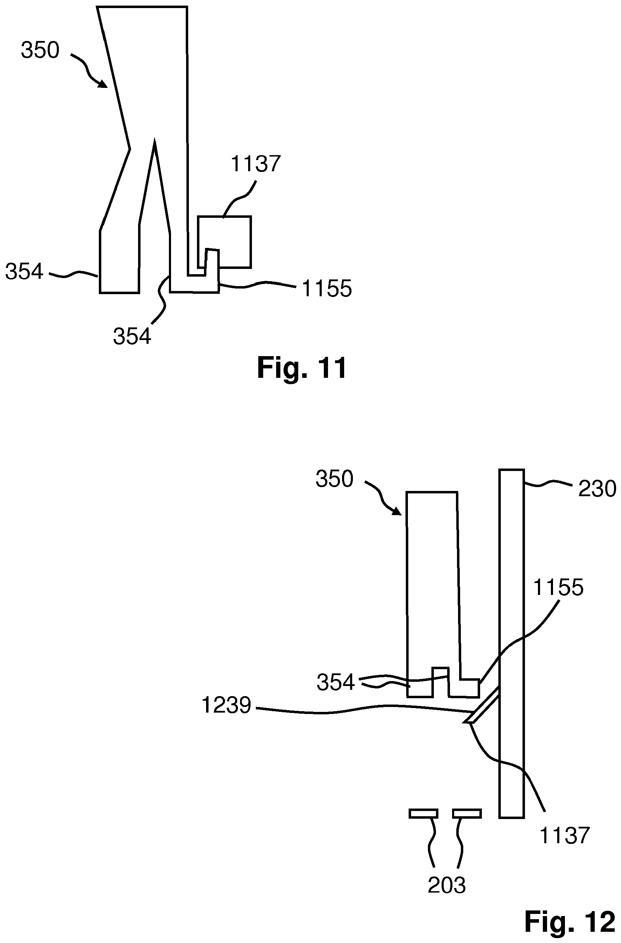

Fig. 12 mit dem Tastenmodul in einer Betätigungsposition;

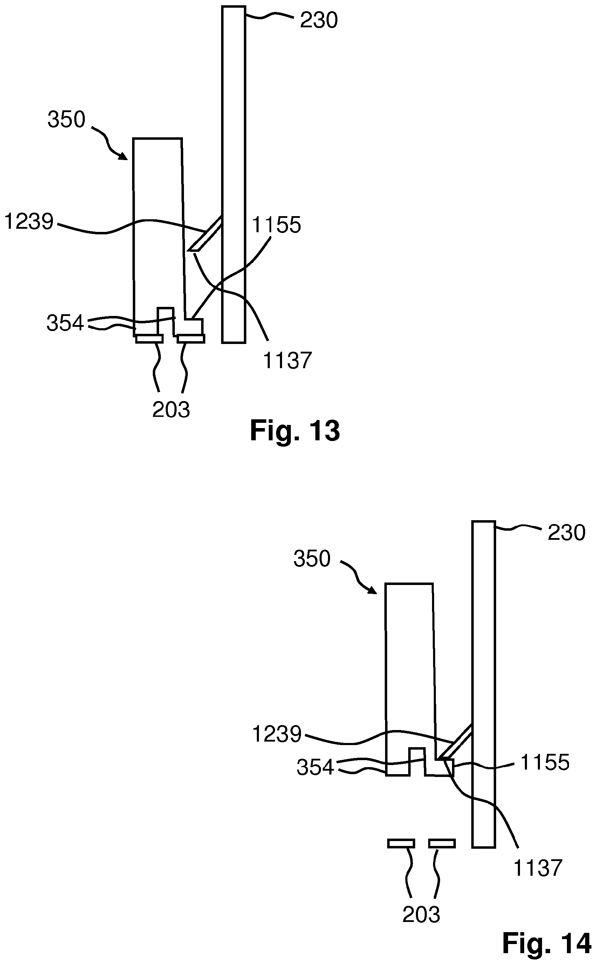

Fig. 14 eine teilweise geschnittene Ansicht des Teilabschnitts der Tastatur aus
Fig. 12 bzw. Fig. 13 mit dem Tastenmodul in einer Ruheposition;

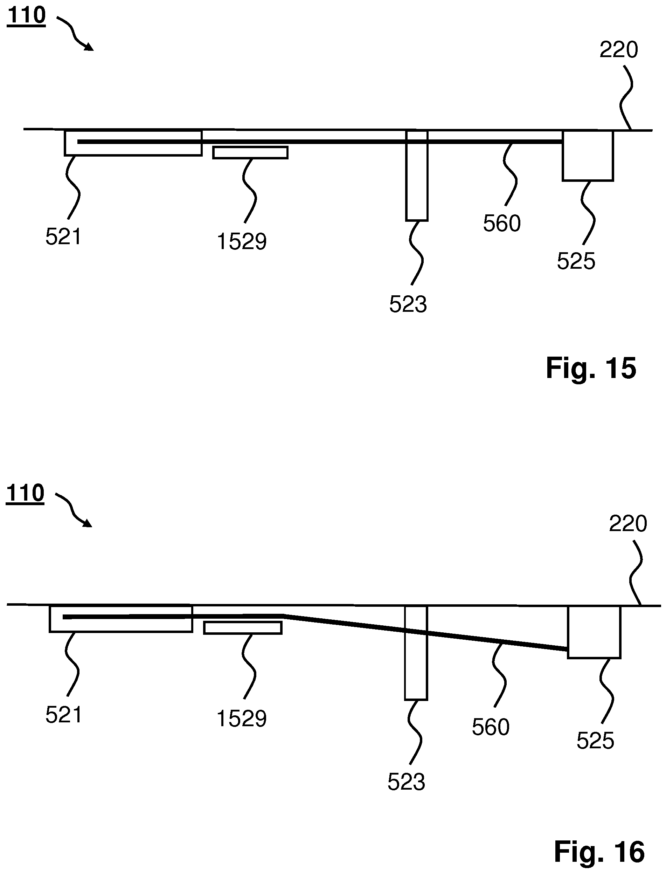

Fig. 15 eine schematische Darstellung eines Tastenmoduls gemäß einem Ausführungsbeispiel der vorliegenden Erfindung in einer Ruheposition; und
Fig. 16 eine schematische Darstellung des Tastenmoduls aus Fig. 15 mit ausgelenktem Drahtbügel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

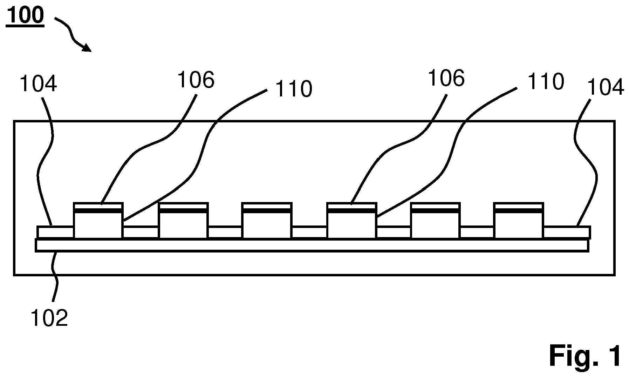

Fig. 1 zeigt eine schematische Darstellung einer Tastatur 100 mit Tastenmodulen 110 gemäß einem Ausführungsbeispiel. Die Tastatur 100 ist beispielsweise Teil eines Notebook-Computers, Laptop-Computers oder dergleichen. Alternativ ist die Tastatur 100 insbesondere auch als ein Peripheriegerät für einen Computer ausgeführt.

Die Tastatur 100 weist ein Schaltungssubstrat 102 auf. Bei dem Schaltungssubstrat 102 handelt es sich beispielsweise um eine Leiterplatte, Schaltungsplatine oder dergleichen. Gemäß dem in Fig. 1 dargestellten Ausführungsbeispiel weist die Tastatur 100 eine Mehrzahl von Tastenmodulen 110 auf. Die Tastenmodule 110 sind an dem Schaltungssubstrat 102 angeordnet.

Auch weist gemäß dem in Fig. 1 dargestellten Ausführungsbeispiel die Tastatur 100 ein Fixierelement 104 zum Fixieren der Tastenmodule 110 an dem Schaltungssubstrat 102 auf. Genauer gesagt ist das Fixierelement 104 ausgebildet, um eine formschlüssige und zusätzlich oder alternativ kraftschlüssige Verbindung mit dem Tastenmodul herzustellen. Lediglich beispielhaft ist hierbei das Fixierelement 104 als ein Tastenrahmen ausgeführt. Alternativ kann das Fixierelement 104 als ein Tastaturoberteil ausgeführt sein.

Ferner ist gemäß dem in Fig. 1 gezeigten und beschriebenen Ausführungsbeispiel an jedem Tastenmodul 110 eine Tastenkappe 106 angebracht. Dabei ist jede Tastenkappe 106 mit einem eigenen Tastenmodul 110 gekoppelt. Jede Einheit aus Tastenmodul 110 und Tastenkappe 106 repräsentiert eine Taste der Tastatur 100. Alternativ repräsentiert jedes Tastenmodul 110 eine Taste der Tastatur 100. Insbesondere auf die Tastenmodule 110 wird unter Bezugnahme auf nachfolgende Figuren noch detaillierter eingegangen.

Die Tastenkappe 106 repräsentiert einen für einen Benutzer der Tastatur 100 sichtbaren und berührbaren Teil einer Taste. Eine Betätigung eines Tastenmoduls 110 erfolgt durch Drücken auf die Tastenkappe 106. Jedes Tastenmodul 110 ist ausgebildet, um auf eine Betätigungskraft mit einer Kraft-Weg-Kennlinie eines Widerstands bzw. einer Rückstellkraft zu reagieren. Ferner ist jedes Tastenmodul 110 ausgebildet, um ansprechend auf eine Betätigung mit einem vordefinierbaren Betätigungsweg eine elektrische Verbindung herzustellen, wobei ein Schaltvorgang ausgeführt wird.

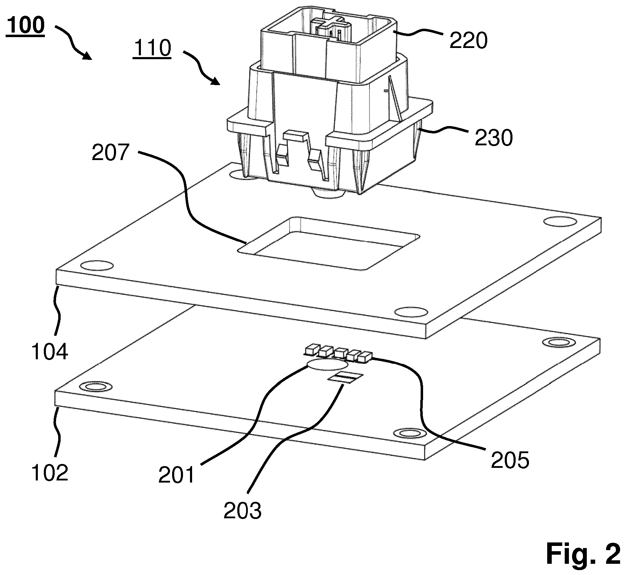

Fig. 2 zeigt eine teilweise auseinandergezogene Darstellung eines Teilabschnitts einer Tastatur 100 gemäß einem Ausführungsbeispiel der vorliegenden Erfindung. Die Tastatur 100 entspricht oder ähnelt hierbei der Tastatur aus Fig. 1. Gezeigt sind das Schaltungssubstrat 102, das Fixierelement 104 in Gestalt des Tastenrahmens und das Tastenmodul 110.

In dem Schaltungssubstrat 102 ist ein Loch 201 ausgeformt. Ein Positioniervorsprung des Tastenmoduls 110 ist in das Loch 201 des Schaltungssubstrats 102 einbringbar bzw. einsteckbar. An dem bzw. in dem Schaltungssubstrat 102 sind ferner zwei elektrische Kontaktflächen 203 bzw. Schaltpads angeordnet, die bei einer Betätigungsbewegung des Tastenmoduls 110 durch das Tastenmodul 110 kurzschließbar sind. Zudem ist an dem bzw. in dem Schaltungssubstrat 102 gemäß dem hier dargestellten Ausführungsbeispiel eine Mehrzahl von elektronischen Bauteilen 205 angeordnet. Bei den elektronischen Bauteilen 205 handelt es sich um eine Leuchtdiode und beispielsweise elektrische Widerstände und/oder dergleichen. Die Kontaktflächen 203 und die Bauteile 205 sind benachbart zu dem Loch 201 angeordnet.

In dem Fixierelement 104 ist eine Halteöffnung 207 zum Halten des Tastenmoduls 110 ausgeformt. Das Tastenmodul 110 ist in die Halteöffnung 207 einsteckbar und einrastbar. In einem aufeinander gestapelten Zustand des Schaltungssubstrats 102 und des Fixierelements 104 liegen das Loch 201, die Kontaktflächen 203 und die Bauteile 205 des Schaltungssubstrats 102 durch die Halteöffnung 207 des Fixierelements 104 frei.

Von dem Tastenmodul 110 sind in der Darstellung von Fig. 2 ein Tastenstößel 220 und ein Modulgehäuse 230 gezeigt. Bei einer Betätigungsbewegung ist der Tastenstößel 220 relativ zu dem Modulgehäuse 230 bewegbar. Der Tastenstößel 220 ist in der Darstellung von Fig. 2 in dem Modulgehäuse 230 aufgenommen dargestellt. Hierbei ist der Tastenstößel 220 genauer gesagt in einer Ruheposition relativ zu dem Modulgehäuse 230 gezeigt, wobei der Tastenstößel 220 in der Ruheposition teilweise in dem Modulgehäuse 230 aufgenommen ist. Auf das Tastenmodul 110 wird unter Bezugnahme auf nachfolgende Figuren noch detaillierter eingegangen.

Anders ausgedrückt zeigt Fig. 2 eine Explosionszeichnung eines Teilabschnitts einer Tastatur 100. Auf dem Schaltungssubstrat 102 können als die Bauteile 205 z. B. zumindest eine Leuchtdiode zur Schalterbeleuchtung, Widerstände, Dioden oder beispielsweise Sensoren mittels eines Oberflächenbefestigungsprozesses oder konventionellen Lötverfahrens montiert sein. Das Tastenmodul 110 wird mittels des Lochs 201 und eines als Zapfen ausgeformten Positioniervorsprungs des Tastenmoduls 110 auf dem Schaltungssubstrat 102 positioniert. Eine Fixierung des Tastenmoduls 110 erfolgt mittels einer Schnappverbindung in der Halteöffnung 207 des Fixierelements 104. gemäß einem anderen Ausführungsbeispiel kann ein Oberteil der Tastatur 100 die Funktion des Fixierrahmens bzw. Fixierelements 104 übernehmen. Eine einfache Montage und Demontage zum Austausch des Tastenmoduls 110 ist möglich.

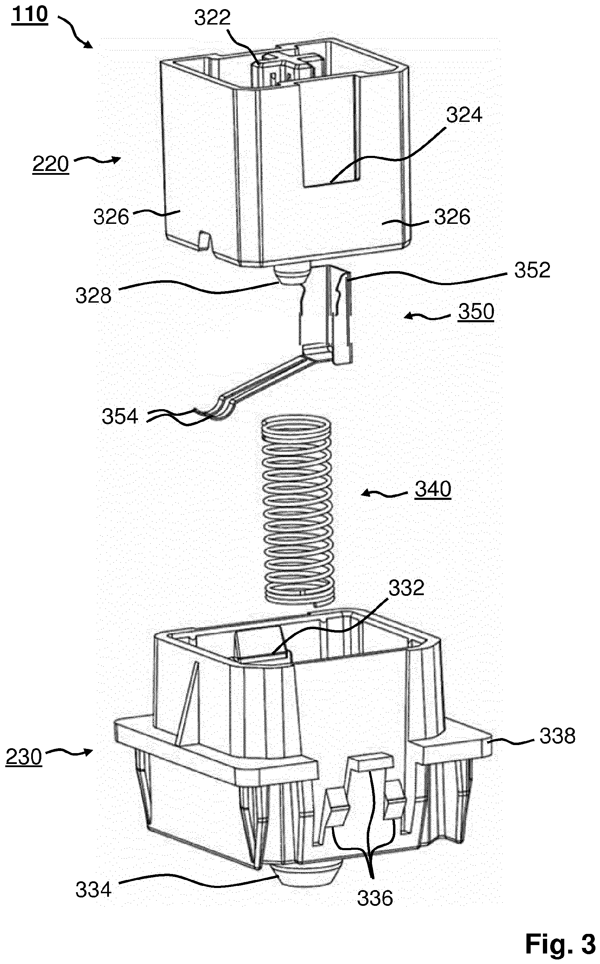

Fig. 3 zeigt eine auseinandergezogene Darstellung des Tastenmoduls 110 aus Fig. 2. Das Tastenmodul 110 weist den Tastenstößel 220, das Modulgehäuse 230, ein elastisches Mittel 340 und ein Auslöseelement 350 auf.

Der Tastenstößel 220 ist bei einer Betätigung des Tastenmoduls 110 relativ zu dem Modulgehäuse 230 translatorisch zwischen einer Ruheposition und einer Betätigungsposition bewegbar. Dies wird als Betätigungsbewegung des Tastenstößels 220 bezeichnet. Der Tastenstößel 220 ist gemäß dem in Fig. 3 dargestellten Ausführungsbeispiel einstückig ausgeformt. Der Tastenstößel 220 ist gemäß einem Ausführungsbeispiel aus einem lichtdurchlässigen Material ausgeformt. So kann eine gleichmäßige Beleuchtung einer Tastenkappe realisiert werden. Gemäß einem anderen Ausführungsbeispiel ist der Tastenstößel 220 aus einem lichtundurchlässigen Material ausgeformt.

Der Tastenstößel 220 weist einen Kopplungsabschnitt 322 auf. Der Kopplungsabschnitt 322 ist ausgeformt, um mit einer Tastenkappe für das Tastenmodul 110 mechanisch koppelbar zu sein. Der Kopplungsabschnitt 322 erstreckt sich entlang einer Bewegungsachse der Betätigungsbewegung. Gemäß dem hier dargestellten Ausführungsbeispiel weist der Kopplungsabschnitt 322 ein kreuzförmiges Querschnittsprofil auf.

Der Tastenstößel 220 weist ferner zumindest einen Stößelanschlag 324 zum Begrenzen der Betätigungsbewegung auf. Auch wenn es in Fig. 3 darstellungsbedingt lediglich implizit gezeigt ist, weist der Tastenstößel 220 zwei Stößelanschläge 324 auf. Jeder der Stößelanschläge 324 ist in Gestalt einer Stufe, einer Schulter bzw. eines Absatzes ausgeformt.

Der Tastenstößel 220 weist ferner zumindest einen Führungsabschnitt zum Führen der Betätigungsbewegung auf. Gemäß dem hier dargestellten Ausführungsbeispiel weist der Tastenstößel 220 als Führungsabschnitte einen Mantelabschnitt 326 des Tastenstößels 220 und einen Führungszapfen 328 auf. Der Mantelabschnitt 326 ist gemäß einem Ausführungsbeispiel als ein Mehrkantrohr ausgeformt. Genauer gesagt ist gemäß dem hier dargestellten Ausführungsbeispiel der Mantelabschnitt 326 als ein Vierkantrohr mit angefasten Kanten als Verdrehsicherung ausgeformt. Anders ausgedrückt ist der Mantelabschnitt 326 durch sich entlang der Achse der Betätigungsbewegung erstreckende Außenwände des Tastenstößels 220 gebildet. Der Führungszapfen 328 erstreckt sich ebenfalls entlang der Achse der Betätigungsbewegung.

Das Auslöseelement 350 des Tastenmoduls 110 ist ausgebildet, um ansprechend auf die Betätigungsbewegung ein Schaltsignal des Tastenmoduls 110 auszulösen. Genauer gesagt ist das Auslöseelement 350 ausgebildet, um das Schaltsignal durch Einwirken auf das Schaltungssubstrat der Tastatur auszulösen. Das Auslöseelement 350 ist an dem Tastenstößel 220 anbringbar. Insbesondere ist das Auslöseelement 350 in einem von dem Mantelabschnitt 326 umschlossenen Bereich des Tastenstößels 220 anbringbar. Gemäß dem hier dargestellten Ausführungsbeispiel ist das Auslöseelement 350 als ein Kontaktgeber 350 ausgeführt. Dabei weist das Auslöseelement 350 mindestens einen im Verlauf der Betätigungsbewegung elastisch verformbaren Kontaktfinger 354 zum Berühren bzw. Kurzschließen von Kontaktflächen des Schaltungssubstrats unter Erzeugung von Reibung auf. Gemäß dem hier dargestellten Ausführungsbeispiel weist das Auslöseelement 350 beispielhaft lediglich zwei Kontaktfinger 354 auf. Ferner weist hierbei das Auslöseelement 350 einen Anbringungsabschnitt 352 zum Anbringen des Auslöseelements 350 an dem Tastenstößel 220 auf.

Das Modulgehäuse 230 ist einstückig ausgeformt. Das Modulgehäuse 230 ist ausgeformt, um den Tastenstößel 220 bewegbar aufzunehmen, um die Betätigungsbewegung des Tastenstößels 220 relativ zu dem Modulgehäuse 230 zu ermöglichen. Ein Korpus des Modulgehäuses 230 ist hierbei trogförmig ausgeformt.

Das Modulgehäuse 230 ist gemäß einem Ausführungsbeispiel aus einem lichtdurchlässigen Material ausgeformt. So kann eine Umgebungsbeleuchtung für die Tastenkappe realisiert werden. Gemäß einem anderen Ausführungsbeispiel ist das Modulgehäuse 230 aus einem lichtundurchlässigen Material ausgeformt. Auf diese Weise kann eine Beleuchtung des Tastenmoduls 110 auf die Tastenkappe beschränkt werden.

Das Modulgehäuse 230 weist zumindest einen Gehäuseanschlag 332 zur Bewegungsbegrenzung für den Tastenstößel 220 auf. Auch wenn es in Fig. 3 lediglich implizit dargestellt ist, weist das Modulgehäuse 230 zwei Gehäuseanschläge 332 auf. Jeder der Gehäuseanschläge 332 ist ausgeformt, um in der Ruheposition des Tastenstößels 220 in Anlage gegen einen jeweiligen der Stößelanschläge 324 des Tastenstößels 220 angeordnet zu sein. Jeder der Gehäuseanschläge 332 ist in Gestalt einer Stufe, einer Schulter bzw. eines Absatzes komplementär zu einem jeweiligen der Stößelanschläge 324 ausgeformt. Durch eine Zusammenwirkung der Stößelanschläge 324 und der Gehäuseanschläge 332 ist der Tastenstößel 220 in dem Modulgehäuse 230 einrastbar und haltbar.

Ferner weist das Modulgehäuse 230 zumindest einen Positioniervorsprung 334 auf. Der Positioniervorsprung 334 ist ausgeformt, um das Modulgehäuse 230 und somit das zusammengefügte Tastenmodul 110 an dem Schaltungssubstrat der Tastatur zu positionieren. Der Positioniervorsprung 334 ist in Gestalt eines Zapfens oder Stiftes ausgeformt. Dabei erstreckt sich der Positioniervorsprung 334 entlang der Achse der Betätigungsbewegung. Gemäß dem hier dargestellten Ausführungsbeispiel ist der Positioniervorsprung 334 durch eine Ausbuchtung des Modulgehäuses 230 gebildet. Der Führungszapfen 328 des Tastenstößels 220 ist ausgeformt, um bei der Betätigungsbewegung in diese Ausbuchtung einzutauchen.

Das Modulgehäuse 230 weist zudem gemäß dem hier dargestellten Ausführungsbeispiel einen Befestigungsabschnitt 336 zum formschlüssigen und/oder kraftschlüssigen Befestigen des Tastenmoduls 110 in der Tastatur auf. Der Befestigungsabschnitt 336 weist Rastvorsprünge bzw. Rastnasen zum Einrasten in dem Fixierelement, insbesondere in der Halteöffnung des Fixierelements der Tastatur auf. Ein um das Modulgehäuse 230 umlaufenden ausgeformter Kragen 338 fungiert als ein weiterer Befestigungsabschnitt bzw. als ein Anschlag hinsichtlich der formschlüssigen und/oder kraftschlüssigen Befestigung.

Das elastische Mittel 340 des Tastenmoduls 110 ist gemäß dem hier dargestellten Ausführungsbeispiel als eine Druckfeder ausgeführt. Das elastische Mittel 340 ist ausgebildet, in einem zusammengesetzten Zustand des Tastenmoduls 110 den Tastenstößel 220 in die Ruheposition vorzuspannen. Dabei ist das elastische Mittel 340 auf den Führungszapfen 328 des Tastenstößels 220 aufstülpbar. Somit ist das elastische Mittel 340 zwischen dem Tastenstößel 220 und dem Modulgehäuse 230 anordenbar. Das elastische Mittel 340 kann auch als eine Rückstellfeder bezeichnet werden.

Gemäß einem Ausführungsbeispiel ist der Tastenstößel 220 beispielsweise transparent oder transluzent ausgeführt, um Symbole auf der Tastenkappe gleichmäßig zu beleuchten. Ferner ist das Modulgehäuse 230 beispielsweise lichtdurchlässig ausgeführt, um Zwischenräume zwischen Tasten zu beleuchten, oder lichtundurchlässig ausgeführt, um Zwischenräume unbeleuchtet zu lassen. Bei der Betätigungsbewegung ergibt sich gemäß einem Ausführungsbeispiel ein linearprogressiver Kraft-Weg-Verlauf. Das elastische Mittel 340 weist einen linearen Kraft-Weg-Verlauf auf. Ab einem Schaltpunkt des Tastenmoduls 110 wird der Kontaktgeber 350 zunehmend vorgespannt und verändert den Kraft-Weg-Verlauf des Tastenmoduls 110.

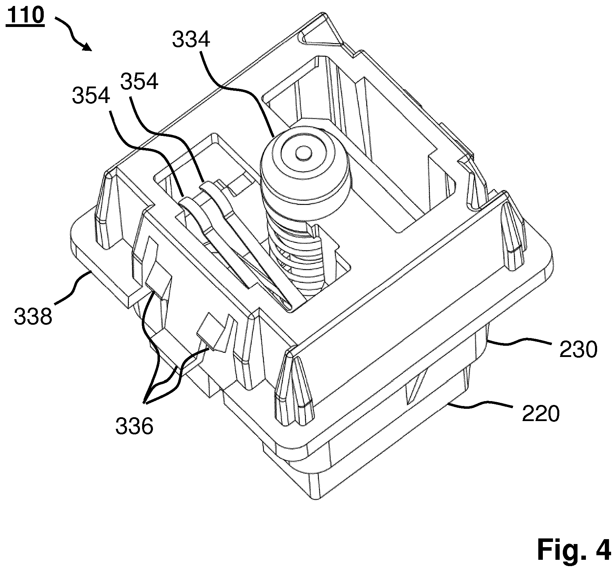

Fig. 4 zeigt eine Unteransicht des Tastenmoduls 110 aus Fig. 2 bzw. Fig. 3. Hierbei sind von dem Tastenmodul 110 ein Teilabschnitt des Tastenstößels 220, das Modulgehäuse 230 mit dem Positioniervorsprung 334, dem Befestigungsabschnitt 336 und dem Kragen 338 sowie die Kontaktfinger 354 des Kontaktgebers gezeigt. In einem dem Schaltungssubstrat zuwendbaren Bodenabschnitt des Modulgehäuses 230 sind zwei Ausschnitte ausgeformt. Durch einen der Ausschnitte hindurch treten die Kontaktfinger 354 des Kontaktgebers um Kurzschließen der Kontaktflächen in Kontakt mit dem Schaltungssubstrat. Durch den anderen der Ausschnitte hindurch ist das Tastenmodul 110 mittels einer Leuchtdiode an dem Schaltungssubstrat beleuchtbar, insbesondere von innen heraus bzw. über einen Innenraum des Tastenmoduls 110.

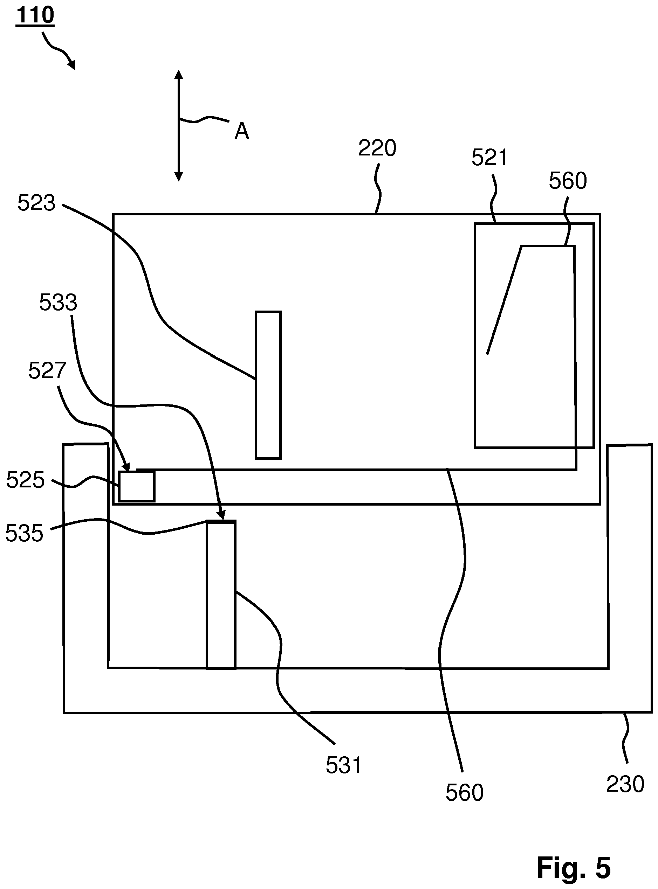

Fig. 5 zeigt eine schematische Darstellung eines Tastenmoduls 110 gemäß einem Ausführungsbeispiel der vorliegenden Erfindung. Das Tastenmodul 110 kann dem Tastenmodul aus einer der vorstehend beschriebenen Figuren ähnlich sein. Gemäß einem Ausführungsbeispiel entspricht das Tastenmodul 110 dem Tastenmodul aus einer der vorstehend beschriebenen Figuren. Bei dem Tastenmodul 110 handelt es sich somit um ein Tastenmodul für eine Tastatur wie die Tastatur aus Fig. 1. Alternativ kann das Tastenmodul 110 ein anderes auf dem Gebiet bekanntes Tastenmodul mit einem anderen Tastenstößel 220 und/oder einem anderen Modulgehäuse 230 sein.

Das Tastenmodul 110 weist einen Tastenstößel 220 auf. Auch wenn es in Fig. 5 Darstellung bedingt nicht explizit gezeigt ist, so weist der Tastenstößel 220 einen Kopplungsabschnitt zum Ankoppeln einer Tastenkappe für das Tastenmodul 110 auf. Ferner weist das Tastenmodul 110 ein Modulgehäuse 230 auf. Das Modulgehäuse 230 ist ausgeformt, um den Tastenstößel 220 bewegbar aufzunehmen, um eine translatorische Betätigungsbewegung des Tastenstößels 220 zwischen einer Ruheposition und einer Betätigungsposition relativ zu dem Modulgehäuse 230 zu ermöglichen. Die Betätigungsbewegung zwischen der Ruheposition und der Betätigungsposition erfolgt entlang einer Achse A bzw. Betätigungsachse A. In der Darstellung von Fig. 5 ist der Tastenstößel 220 in der Ruheposition relativ zu dem Modulgehäuse 230 gezeigt.

Das Tastenmodul 110 weist auch einen Drahtbügel 560 zum Bereitstellen einer taktilen und/oder akustischen Rückkopplung für das Tastenmodul 110 im Verlauf der Betätigungsbewegung auf. Der Drahtbügel 560 ist dazu im Verlauf der Betätigungsbewegung elastisch auslenkbar. Der Drahtbügel 560 ist aus einem Metalldraht gebogen. Dabei ist der Drahtbügel 560 mit einem Gesamtbiegewinkel von weniger als 360 Grad gebogen ausgeformt. Der Drahtbügel 560 ist an dem Tastenstößel 220 fixiert.

Gemäß dem in Fig. 5 dargestellten Ausführungsbeispiel der vorliegenden Erfindung ist der Drahtbügel 560 in einem Fixierabschnitt 521 des Tastenstößels 520 fixiert. Der Fixierabschnitt 521 ist als ein Einschubfach oder Einsteckfach für den Drahtbügel 560 ausgeformt. Auch kann der Fixierabschnitt 521 als eine Aussparung oder Einbuchtung bezeichnet werden. Ein Teilabschnitt des Drahtbügels 560 ist in dem Fixierabschnitt 521 angeordnet und ein weiterer Teilabschnitt des Drahtbügels 560 ist außerhalb des Fixierabschnitts 521 und innerhalb des Tastenstößels 220 angeordnet. Der weitere Teilabschnitt des Drahtbügels 560 außerhalb des Fixierabschnitts 521 ist im Verlauf der Betätigungsbewegung relativ zu dem Teilabschnitt des Drahtbügels 560 innerhalb des Fixierabschnitts 521 elastisch auslenkbar. Auf den Fixierabschnitt 521 wird unter Bezugnahme auf nachfolgende Figuren noch detaillierter eingegangen.

Zum Auslenken des Drahtbügels 560, genauer gesagt des weiteren Teilabschnitts des Drahtbügels 560 außerhalb des Fixierabschnitts 521 relativ zu dem Teilabschnitt des Drahtbügels 560 innerhalb des Fixierabschnitts 521, weist der Tastenstößel 220 eine schräg zu der Achse Ader Betätigungsbewegung geneigte Schrägfläche 523 auf weist ferner das Modulgehäuse 230 eine schräg zu der Achse Ader Betätigungsbewegung geneigte Rippe 531 mit einer Nase 535 und einer normal zu der Achse Ader Betätigungsbewegung geneigten Anlagefläche 533 auf. Die Schrägfläche 523 ist Teil eines Stegs des Tastenstößels 220. Die Rippe 531 ragt zumindest teilweise in den Tastenstößel 220 hinein. Die Nase 535 repräsentiert einen Übergangsabschnitt zwischen der Anlagefläche 533 und einem schräg zu der Achse A der Betätigungsbewegung geneigten Schrägabschnitt der Rippe 535. Die Schrägfläche 523, die Rippe 531, die Anlagefläche 533 und die Nase 535 sind ausgeformt und angeordnet, um den Drahtbügel 560 im Verlauf der Betätigungsbewegung elastisch auszulenken und ruckartig wieder freizugeben. Die Schrägfläche 523, die Rippe 531, die Anlagefläche 533 und die Nase 535 sind ausgeformt und angeordnet, um den Drahtbügel 560 zumindest für die taktile Rückkopplung auszulenken. Auf die Auslenkung des Drahtbügels 560 im Verlauf der Betätigungsbewegung wird unter Bezugnahme auf nachfolgende Figuren noch detaillierter eingegangen.

Gemäß dem in Fig. 5 dargestellten Ausführungsbeispiel der vorliegenden Erfindung weist der Tastenstößel 220 für die akustische Rückkopplung einen Vorsprungsabschnitt 525 mit einer normal zu der Achse Ader Betätigungsbewegung geneigten Anschlagfläche 527 auf. Die Anschlagfläche 527 ist ausgeformt und angeordnet, um einen Anschlag für den Drahtbügel 560 bei dessen Auslenkung im Verlauf der Betätigungsbewegung bereitzustellen. Der Drahtbügel 560 ist ausgeformt, um bei dessen Auslenkung im Verlauf der Betätigungsbewegung gegen die Anschlagfläche 527 anzuschlagen. Anders ausgedrückt sind die Anschlagfläche 527 und der Drahtbügel 560 ausgeformt und angeordnet sein, für die akustische und/oder taktile Rückkopplung im Verlauf der Betätigungsbewegung einen Aufprall des Drahtbügels 560 an der Anschlagfläche 527 zu bewirken.

Gemäß einem anderen Ausführungsbeispiel der vorliegenden Erfindung kann der Drahtbügel 560 so gekürzt sein, dass ein Anschlag oder Aufprall des Drahtbügels 560 an der Anschlagfläche 527 des Vorsprungsabschnitts 525 unterbleibt. Zusätzlich oder alternativ kann der Vorsprungsabschnitt 525 mit der Anschlagfläche 527 weggelassen sein. Gemäß einem solchen Ausführungsbeispiel erfolgt lediglich eine taktile Rückkopplung.

Anders ausgedrückt weist das Tastenmodul 110 bzw. Tastenelement den Tastenstößel 220 und das Modulgehäuse 230 auf. In dem Tastenstößel 220 ist der Fixierabschnitt 521 als eine Aussparung für einen Drahtbügel 560 angeordnet. Der Drahtbügel 560 ist fest in dem Fixierabschnitt 521 eingespannt. Der Drahtbügel 560 ist mit einem Winkel von mindestens 90 Grad, jedoch weniger als 360 Grad gebogen. Ein langer gerader Abschnitt des Drahtbügels 560 erstreckt sich über einen Großteil einer Breite des Tastenstößels 220 quer oder normal zu der Achse Ader Betätigungsbewegung. Ein freies Ende des langen geraden Abschnitts des Drahtbügels 560 liegt auf der Anschlagfläche 527 des Vorsprungsabschnitts 525 im Tastenstößel 220 auf. Ein an dem Tastenstößel 220 fixiertes Ende des Drahtbügels 560 ist in dem Fixierabschnitt 521 angeordnet.

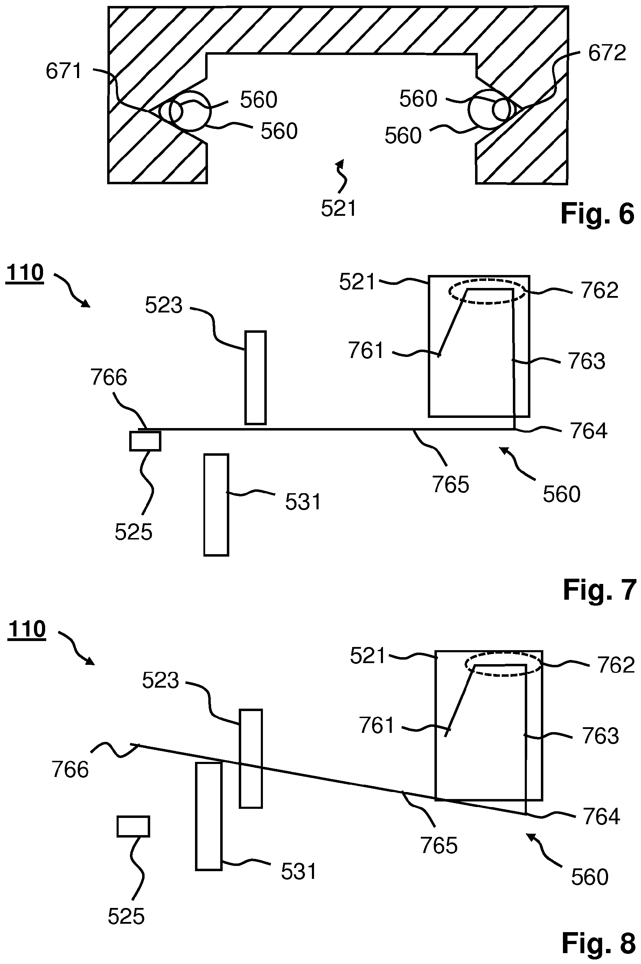

Fig. 6 zeigt eine schematische Schnittdarstellung des Fixierabschnitts 521 aus Fig. 5. Dabei ist der Fixierabschnitt 521 in einer Ebene normal zu der Achse der Betätigungsbewegung aus Fig. 5 geschnitten dargestellt. Der Fixierabschnitt 521 weist eine erste Lagerkerbe 671 und eine zweite Lagerkerbe 672 auf. Die Lagerkerben 671 und 672 sind ausgeformt und angeordnet, um den Drahtbügel 560 zu lagern. Sowohl die erste Lagerkerbe 671 als auch die zweite Lagerkerbe 672 spannt in dem Fixierabschnitt 521 einen Winkel von weniger als 180 Grad oder höchstens 90 Grad auf. Zur Veranschaulichung der Lagerung des Drahtbügels 560 mit unterschiedlichen Drahtdurchmessern in den Lagerkerben 671 und 672 sind in jeder der Lagerkerben 671 und 672 ein Teil eines Drahtbügels 560 mit einem ersten Durchmesser und ein Teil eines Drahtbügels 560 mit einem zweiten Durchmesser eingezeichnet.

Fig. 7 zeigt eine schematische Darstellung eines Tastenmoduls 110 gemäß einem Ausführungsbeispiel der vorliegenden Erfindung in einer Ruheposition. Das Tastenmodul 110 entspricht oder ähnelt hierbei dem Tastenmodul aus Fig. 5. In der Darstellung von Fig. 7 sind von dem Tastenmodul 110 dabei der Fixierabschnitt 521, die Schrägfläche 523 und der Vorsprungsabschnitt 525 des Tastenstößels, die Rippe 531 des Modulgehäuses und der Drahtbügel 560 schematisch dargestellt. Hierbei ist der Tastenstößel in der Ruheposition relativ zu dem Modulgehäuse gezeigt, wobei sich der Drahtbügel 560 in einer Ausgangsposition befindet.

Der Drahtbügel 560 weist entlang seiner Längserstreckung von einem Ende zum anderen Ende ein an dem Tastenstößel fixiertes Ende 761, einen ersten Biegebereich 762, einen ersten geraden Abschnitt 763, einen zweiten Biegebereich 764, einen zweiten geraden Abschnitt 765 und ein freies Ende 766 in der genannten Reihenfolge auf. In dem ersten Biegebereich 762 ist der Drahtbügel 560 gemäß dem hier dargestellten Ausführungsbeispiel weniger als 180 Grad gebogen. In dem zweiten Biegebereich 764 ist der Drahtbügel 560 zwischen 80 und 100 Grad gebogen, beispielsweise 90 Grad. Der zweite gerade Abschnitt 765 ist gemäß dem hier dargestellten Ausführungsbeispiel länger als der erste gerade Abschnitt 763. Der Drahtbügel 560 ist in der Darstellung von Fig. 7 lediglich schematisch und beispielhaft als in dem ersten Biegebereich 762 zweifach gebogen gezeigt. Gemäß einem Ausführungsbeispiel und wie es in Fig. 5 gezeigt ist, ist der Drahtbügel 560 in dem ersten Biegebereich 762 lediglich einfach und abgerundet gebogen.

Der zweite gerade Abschnitt 765 und das freie Ende 766 des Drahtbügels 560 sind im Verlauf der Betätigungsbewegung relativ zu dem ersten geraden Abschnitt 763, der ersten Biegestelle 762 und dem fixierten Ende 761 elastisch auslenkbar. Das an dem Tastenstößel fixierte Ende 761, der erste Biegebereich 762, der erste gerade Abschnitt 763 und zumindest ein Teilabschnitt des zweiten Biegebereichs 764 des Drahtbügels 560 sind an dem Tastenstößel fixiert und in dem Fixierabschnitt 521 angeordnet. Dabei ist das an dem Tastenstößel fixierte Ende 761 in einer ersten der Lagerkerben des Fixierabschnitts 521 gelagert und ist der erste gerade Abschnitt 763 in einer zweiten der Lagerkerben des Fixierabschnitts 521 gelagert. Das an dem Tastenstößel fixierte Ende 761 des Drahtbügels 560 ist in der ersten Lagerkerbe des Fixierabschnitts 521 verkantet bzw. verkeilt.

Das an dem Tastenstößel fixierte Ende 761, der erste Biegebereich 762 und der erste gerade Abschnitt 763 des Drahtbügels 560 bilden einen Widerhaken oder Widerhakenabschnitt des Drahtbügels 560. Zusätzlich weist gemäß dem hier dargestellten Ausführungsbeispiel der vorliegenden Erfindung das an dem Tastenstößel fixierte Ende 761 eine scharfe Kante auf. Aufgrund der scharfen Kante und/oder des Widerhakens verkeilt sich der Drahtbügel 560 in dem Fixierabschnitt 521 für einen sicheren Halt des Drahtbügels 560 an dem Tastenstößel.

In der Ruheposition ist das freie Ende 766 des Drahtbügels 560 in Anlage gegen die Anschlagfläche des Vorsprungsabschnitts 525 angeordnet. Die Schrägfläche 523 und die Rippe 531 sind in der Ruheposition von dem zweiten geraden Abschnitt 765 des Drahtbügels 560 beabstandet angeordnet.

Fig. 8 zeigt eine schematische Darstellung des Tastenmoduls 110 aus Fig. 7 im Verlauf einer Betätigungsbewegung. Hierbei entspricht die Darstellung bzw. Anordnung des Tastenmoduls 110 jener aus Fig. 7 mit Ausnahme dessen, dass der Tastenstößel relativ zu dem Modulgehäuse von der Ruheposition in Richtung der Betätigungsposition bewegt ist. Dabei ist der zweite gerade Abschnitt 765 des Drahtbügels 560 mit dem freien Ende 766 des Drahtbügels 560 durch Anlage gegen die Schrägfläche 523 und gegen die Rippe 531 relativ zu dem ersten geraden Abschnitt 763, der ersten Biegestelle 762 und dem fixierten Ende 761 elastisch ausgelenkt, mit einer ersten Richtungskomponente entlang der Achse der Betätigungsbewegung und einer zweiten Richtungskomponente quer oder schräg bezüglich der Achse der Betätigungsbewegung. Hierbei ist das freie Ende 766 des Drahtbügels 560 von der Anschlagfläche des Vorsprungsabschnitts 525 beabstandet angeordnet.

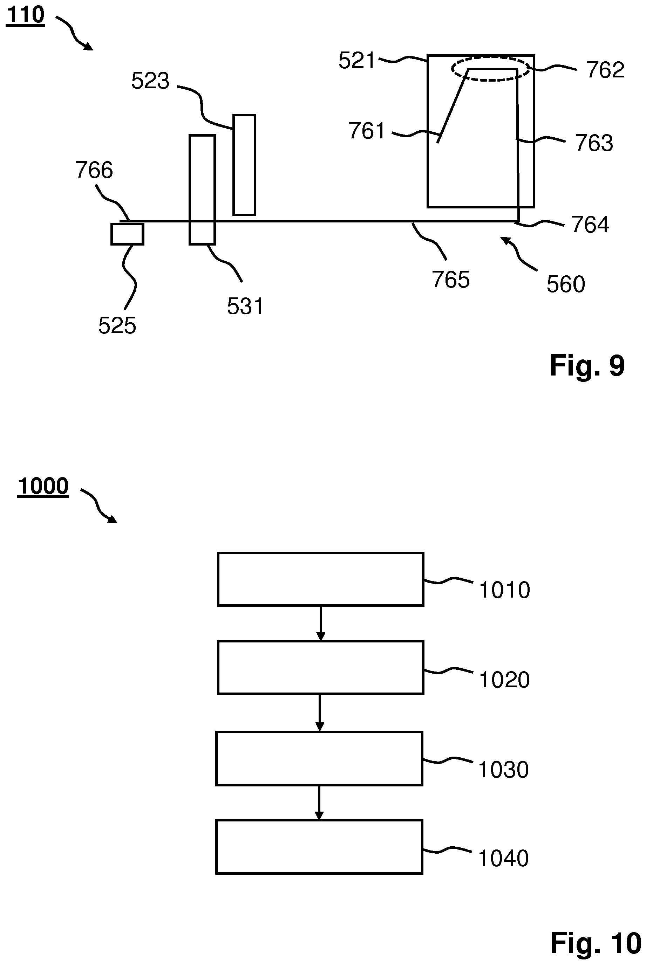

Fig. 9 zeigt eine schematische Darstellung des Tastenmoduls 110 aus Fig. 7 bzw. Fig. 8 in einer Betätigungsposition. Dabei entspricht die Darstellung bzw. Anordnung des Tastenmoduls 110 jener aus Fig. 8 mit Ausnahme dessen, dass der Tastenstößel relativ zu dem Modulgehäuse in die Betätigungsposition bzw. eine Endposition oder Umkehrposition der Betätigungsbewegung bewegt ist, wobei der Drahtbügel 560 sich nach dem Bereitstellen der taktilen und akustischen Rückkopplung durch Gleiten über die Nase der Rippe 531 und durch Aufprall bzw. Anschlag gegen die Anschlagfläche des Vorsprungsabschnitts 525 wieder in der Ausgangsposition befindet, in welcher das freie Ende 766 in Anlage gegen die Anschlagfläche des Vorsprungsabschnitts 525 angeordnet ist.

Somit zeigen Fig. 7, Fig. 8 und Fig. 9 einen Verlauf der Betätigungsbewegung des Tastenmoduls 110 von der Ruheposition zu der Betätigungsposition. Unter Bezugnahme auf die vorstehend beschriebenen Figuren werden Vorgänge in dem Tastenmodul 110 im Verlauf der Betätigungsbewegung nachfolgend nochmals zusammenfassend erläutert. Wird der Tastenstößel 220 entlang der Achse A der Betätigungsbewegung von der Ruheposition in Richtung der Betätigungsposition bewegt, so stößt der zweite gerade Abschnitt 765 des Drahtbügels 560 an der Anlagefläche 527 des Vorsprungsabschnitts 525 an, welcher Teil des Modulgehäuses 230 ist. Eine weitere Auslenkung des Drahtbügels 560 entlang der Achse A der Betätigungsbewegung ist somit vorerst gesperrt. Wird der Tastenstößel 220 weiter entlang der Achse Ader Betätigungsbewegung in Richtung der Betätigungsposition bewegt, so wird der zweite gerade Abschnitt 765 mit dem freien Ende 766 des Drahtbügels 560 in die Gegenrichtung entlang der Achse Ader Betätigungsbewegung ausgelenkt und vorgespannt. Ferner gelangt die Schrägfläche 523 des Tastenstößels 220 an den zweiten geraden Abschnitt 765 des Drahtbügels 560 und bewirkt, dass der zweite gerade Abschnitt 765 des Drahtbügels 560 über die Nase 535 der Rippe 531 gleitet, wobei eine mechanische Spannung des Drahtbügels 560 schlagartig nachlässt. Das freie Ende 766 des zweiten geraden Abschnitts 765 des Drahtbügels 560 schlägt auf die Anschlagfläche 527 des Vorsprungsabschnitts 525 des Tastenstößels 220. Dabei kann ein deutlich hörbares Klick-Geräusch als akustische Rückkopplung wahrgenommen werden. Zudem kann der Schlag auch taktil gefühlt werden, da der Drahtbügel 560 vollständig in dem Tastenstößel 220 angeordnet ist. Die akustische Rückkopplung und die taktile Rückkopplung sind abhängig von der Drahtdicke bzw. dem Drahtdurchmesser des Drahtbügels 560 und können variiert werden. Beim Zurückfahren in die Ruheposition bzw. Ausgangsposition entlang der Achse der Betätigungsbewegung A wird der zweite gerade Abschnitt 765 des Drahtbügels 560 von der Rippe 531 ausgelenkt und schließlich wieder über die Nase 535 bewegt. Nach dem Passieren der Nase 535 liegt der Drahtbügel 560 wieder, wie in der Ruheposition, auf der Anschlagfläche 527 des Vorsprungsabschnitts 525 auf. Der Tastenstößel 220 kann nun erneut betätigt werden und der vorstehend beschriebene Ablauf wiederholt sich.

Fig. 10 zeigt ein Ablaufdiagramm eines Verfahrens 1000 gemäß einem Ausführungsbeispiel der vorliegenden Erfindung. Das Verfahren 1000 ist ausführbar zum Versehen eines Tastenstößels eines Tastenmoduls für eine Tastatur mit einem Drahtbügel zum Bereitstellen einer taktilen und/oder akustischen Rückkopplung. Das Verfahren 1000 zum Versehen ist unter Verwendung einer Fertigungsmaschine ausführbar. Das Verfahren 1000 zum Versehen ist insbesondere unter Verwendung einer einzigen Fertigungsmaschine ausführbar. Durch Ausführen des Verfahrens 100 zum Versehen sind der Tastenstößel und der Drahtbügel des Tastenmoduls aus einer der vorstehend beschriebenen Figuren oder eines ähnlichen Tastenmoduls herstellbar bzw. bereitstellbar.

In einem Schritt 1010 des Zuführens werden einerseits der Tastenstößel und andererseits Draht von einer Spule in die Fertigungsmaschine zugeführt. Nachfolgend wird in einem Schritt 1020 des Biegens der Draht unter Verwendung der Fertigungsmaschine mit einem Gesamtbiegewinkel von weniger als 360 Grad gebogen, um den Drahtbügel auszuformen. Nachfolgend wird in einem Schritt 1030 des Trennens der ausgeformte Drahtbügel unter Verwendung der Fertigungsmaschine von dem Draht auf der Spule getrennt. Anders ausgedrückt wird in dem Schritt 1030 des Trennens der Draht abgelängt. Nachfolgend wird in einem Schritt 1040 des Fixierens der Drahtbügel unter Verwendung der Fertigungsmaschine an dem Tastenstößel fixiert. In dem Schritt 1040 des Fixierens wird der Drahtbügel beispielsweise in den Tastenstößel eingepresst.

Fig. 11 zeigt eine schematische Unteransicht eines Teilabschnitts eines Tastenmoduls gemäß einem Ausführungsbeispiel der vorliegenden Erfindung. Von dem Tastenmodul sind in der Darstellung von Fig. 11 das Auslöseelement 350 mit beispielhaft lediglich zwei Kontaktfingern 354 und eine Anlagefläche 1137 des Modulgehäuses gezeigt. Das Tastenmodul in Fig. 11 entspricht dem Tastenmodul aus einer der vorstehend beschriebenen Figuren mit Ausnahme dessen, dass das Modulgehäuse die Anlagefläche 1137 aufweist. Die Anlagefläche 1137 ist so ausgeformt und angeordnet, dass das Auslöseelement 350 in der Ruheposition des Tastenstößels des Tastenmoduls in Anlage gegen die Anlagefläche 1137 angeordnet ist.

Gemäß dem hier dargestellten Ausführungsbeispiel ist einer der Kontaktfinger 354 in der Ruheposition des Tastenstößels des Tastenmoduls in Anlage gegen die Anlagefläche 1137 angeordnet. Hierzu weist das Auslöseelement 350 an dem betreffenden Kontaktfinger 354 einen Auflageabschnitt 1155 auf. In der Ruheposition besteht ein mechanischer Kontakt zwischen dem Auflageabschnitt 1155 und der Anlagefläche 1137. Anders ausgedrückt befindet sich in der Ruheposition der Auflageabschnitt 1155 in Anlage gegen die Anlagefläche 1137.

Durch das Anliegen des Auslöseelements 350 bzw. des Kontaktgebers an der Anlagefläche 1137 als Anschlag in der Ruhestellung können unerwünschte Schwingungen des Auslöseelements 350, insbesondere auch der Kontaktfinger 354, gedämpft bzw. verhindert werden.

Fig. 12 zeigt eine teilweise geschnittene Ansicht eines Teilabschnitts einer Tastatur gemäß einem Ausführungsbeispiel der vorliegenden Erfindung mit einem Tastenmodul vor einer Montage bzw. Erstbetätigung. Bei der Tastatur handelt es sich um die Tastatur aus der vorstehend beschriebenen Figuren. Das Tastenmodul entspricht oder ähnelt dem Tastenmodul aus Fig. 11, wobei von dem Tastenmodul in der Darstellung von Fig. 12 eine Seitenwand des Modulgehäuses 230 mit einem die Anlagefläche 1137 und eine Schrägfläche 1239 aufweisenden Dämpferabschnitt und das Auslöseelement 350 mit den beispielhaft lediglich zwei Kontaktfingern 354 und dem Auflageabschnitt 1155 gezeigt sind und von der Tastatur zusätzlich die Kontaktflächen 203 des Schaltungssubstrats gezeigt sind.

In Fig. 12 ist ein Zustand vor einer Montage bzw. vor einem erstmaligen Betätigen des Tastenmoduls der Tastatur gezeigt. Vor der Montage bzw. Erstbetätigung ist der Dämpferabschnitt mit der Anlagefläche 1137 und der Schrägfläche 1239 zwischen dem Auslöseelement 350 und den Kontaktflächen 203 angeordnet. Die Schrägfläche 1239 ist ausgebildet, um ein erstmaliges und einmaliges Abgleiten des Auslöseelements 350 zu ermöglichen bzw. zu bewirken. Die Anlagefläche 1137 kann in einem spitzen Winkel oder parallel zu der Schrägfläche 1239 ausgerichtet sein. Die Anlagefläche 1137 ist wenigstens derart ausgebildet, dass ein Abgleiten zurück in die Position vor der Montage bzw. Erstbetätigung verhindert wird.

Das Auslöseelement 350 kann bei einer Montage bzw. einer Erstbetätigung des Tastenmoduls erstmalig und einmalig entlang der Schrägfläche 1239 ausgelenkt und an dem Dämpferabschnitt vorbeigelenkt werden und somit an dem Dämpferabschnitt vorbeigleiten. Zusätzlich oder alternativ kann bei dem Abgleiten des Auslöseelements 350 über die Schrägfläche 1239 der Dämpferabschnitt, insbesondere die Schrägfläche 1239 ausgelenkt werden. Somit kann zusätzlich oder alternativ zu dem Auslöseelement 350 auch der Dämpferabschnitt ein flexibles Material aufweisen.

Fig. 13 zeigt eine teilweise geschnittene Ansicht des Teilabschnitts der Tastatur aus Fig. 12 mit dem Tastenmodul in einer Betätigungsposition. Hierbei entspricht die Darstellung in Fig. 13 der Darstellung aus Fig. 12 mit Ausnahme dessen, dass das Tastenmodul in der Betätigungsposition gezeigt ist, wobei ein elektrischer Kontakt zwischen Kontaktfingern 354 und den Kontaktflächen 203 hergestellt ist. Hierbei sind die Kontaktfinger 354 und der Auflageabschnitt 1155 zwischen den Kontaktflächen 203 und dem an dem Modulgehäuse 230 ausgeformten Dämpferabschnitt mit der Anlagefläche 1137 und der Schrägfläche 1239 angeordnet. Auch ist hierbei der Auflageabschnitt 1155 von dem Dämpferabschnitt, insbesondere der Anlagefläche 1137 beabstandet. Ausgehend von dem in Fig. 12 dargestellten Zustand zum in Fig. 13 gezeigten Zustand ist der Auflageabschnitt 1155 des Auslöseelements 350 erstmalig und einmalig an der Schrägfläche 1239 und der Anlagefläche 1137 vorbeigeglitten.

Fig. 14 zeigt eine teilweise geschnittene Ansicht des Teilabschnitts der Tastatur aus Fig. 12 bzw. Fig. 13 mit dem Tastenmodul in einer Ruheposition. Hierbei entspricht die Darstellung in Fig. 14 der Darstellung aus Fig. 13 mit Ausnahme dessen, dass das Tastenmodul in der Ruheposition gezeigt ist, wobei der Auflageabschnitt 1155 des Auslöseelements 350 an der Anlagefläche 1137 anliegt. Ein Geräusch durch Schwingungen des Auslöseelements 350, insbesondere der Kontaktfinger 354, kann so verhindert werden. Das Auslöseelement 350, genauer gesagt der Auflageabschnitt 1155 kann nicht mehr über den Dämpferabschnitt hinweg zurückgleiten, um beispielsweise den in Fig. 12 gezeigten Zustand zu erreichen. Der Auflageabschnitt 1155 greift beispielsweise hinter die Anlagefläche 1137.

Gemäß einem Ausführungsbeispiel und unter Bezugnahme auf die vorstehend beschriebenen Figuren kann bei einem Montageverfahren zum Montieren des Tastenmoduls 110 der Tastenstößel 220 mit dem daran angeordneten Auslöseelement 350 in das Modulgehäuse 230 eingesetzt werden. Hierbei kann eine Relativbewegung zwischen dem Tastenstößel 220 mit dem Auslöseelement 350 einerseits und dem Modulgehäuse 230 andererseits entlang der Achse A der Betätigungsbewegung bewirkt werden. Auch wird bei dieser Relativbewegung das Auslöseelement 350 und/oder der Dämpferabschnitt bzw. die Schrägfläche 1239 ausgelenkt, sodass das Auslöseelement 350 erstmalig und einmalig an dem Dämpferabschnitt vorbeigelenkt wird und an dem Dämpferabschnitt vorbeigleitet. Die Relativbewegung wird bei dem Einsetzen des Tastenstößels 220 einschließlich des Auslöseelements 350 in das Modulgehäuse 230 zumindest bis zum Erreichen der Ruheposition ausgeführt. Durch die Anlage des Auslöseelements 350 gegen die Anlagefläche 1137 ist eine Rückkehr des Tastenstößels 220 bzw. des Auslöseelements 350 in eine Position wie vor der Montage, siehe Fig. 12, unterbunden.

Fig. 15 zeigt eine schematische Darstellung eines Tastenmoduls 110 gemäß einem Ausführungsbeispiel der vorliegenden Erfindung in einer Ruheposition. Dabei entspricht das Tastenmodul 110 dem Tastenmodul aus Fig. 5 bzw. Fig. 7 mit Ausnahme dessen, dass der Tastenstößel 220 ferner einen Rückhalteabschnitt 1529 zum Rückhalten des Drahtbügels 560 gegen eine Bewegung weg von einer Wand des Tastenstößels 220 im Verlauf der Betätigungsbewegung aufweist. Von dem Tastenmodul 110 sind in der Darstellung von Fig. 15 hierbei die Wand des Tastenstößels 220, der Fixierabschnitt 521, die Schrägfläche 523 und der Vorsprungsabschnitt 525, der Drahtbügel 560 und der Rückhalteabschnitt 1529 gezeigt. Somit sind in Fig. 15 von dem Tastenmodul 110 genauer gesagt Teilabschnitte des Tastenstößels 220 und der der Drahtbügel 560 dargestellt.

Der Rückhalteabschnitt 1529 ist zwischen dem Fixierabschnitt 521 und der Schrägfläche 523 angeordnet. Auch ist der Rückhalteabschnitt 1529 benachbart zu dem Fixierabschnitt 521 angeordnet. Dabei ist der Rückhalteabschnitt 1529 als ein Vorsprung oder Führungsvorsprung ausgeformt. Ein Teilabschnitt des Drahtbügels 560 ist zwischen dem Rückhalteabschnitt 1529 und der Wand des Tastenstößels 220 angeordnet bzw. aufgenommen. Insbesondere ist ein Teilabschnitt des zweiten geraden Abschnitts des Drahtbügels 560 benachbart zu dem zweiten Biegebereich des Drahtbügels zwischen dem Rückhalteabschnitt 1529 und der Wand des Tastenstößels 220 angeordnet bzw. aufgenommen.

Der Rückhalteabschnitt 1529 bewirkt insbesondere, dass der Drahtbügel 560 nach der Betätigungsbewegung wieder exakt in eine Ausgangsstellung zurückkehrt. Somit kann auch ein wiederholbareres Klick-Geräusch erreicht werden, da das freie Ende des Drahtbügels zuverlässig auf die Anschlagfläche zurückgeführt wird. Wenn der Drahtbügel 560 ausgelenkt wird, bewirkt der Rückhalteabschnitt 1529 eine Parallele oder im Wesentlichen parallele Ausrichtung des Drahtbügels 560 relativ zu der Wand des Tastenstößels 220. Anders ausgedrückt hemmt der Rückhalteabschnitt 1529 ein seitliches Ausschwenken des Drahtbügels 560. Auch kann aufgrund eines durch den Rückhalteabschnitt 1529 verkürzten Hebelarms eine mechanische Spannung im zweiten geraden Abschnitt des Drahtbügels 560 aufgebaut bzw. erhöht werden, wodurch ein exaktes Zurückschwenken des Drahtbügels 560 in seine Ausgangslage erreicht werden kann. Der Rückhalteabschnitt 1529 hält den Drahtbügel 560 bzw. den Anfang des zweiten geraden Abschnittes des Drahtbügels 560 in Position.

Fig. 16 zeigt eine schematische Darstellung des Tastenmoduls 110 aus Fig. 15 mit ausgelenktem Drahtbügel 560. die Darstellung in Fig. 16 entspricht der Darstellung aus Fig. 15 mit Ausnahme dessen, dass der zweite bzw. lange gerade Abschnitt des Drahtbügels 560 im Verlauf der Betätigungsbewegung an einer Kante des Rückhalteabschnitts 1529 gebogen ist. Hierbei handelt es sich um eine planmäßige Auslenkung zur Rückkehr in die Ruheposition. Somit ist in Fig. 16 das Auslenken des Drahtbügels 560 gezeigt. Durch den Rückhalteabschnitt 1529 wird bewirkt, dass der Drahtbügel in dem Fixierabschnitt 521 fest fixiert wird und weder gebogen noch in sich verdreht wird. Durch die Führung des Rückhalteabschnitts 1529 verkürzt sich der Hebelarm und es wird eine höhere Spannung aufgebaut, was den Rückgang in die Ruhestellung unterstützt. Im Verlauf der Betätigungsbewegung wird der Drahtbügel 560 zweimal ausgelenkt. Ein erstes Mal beim Auslenken zum Erzeugen des Klick-Geräuschs von der Schrägfläche 523 des Tastenstößels 220. Ein zweites Mal von der Rippe des Modulgehäuses bei einer Rückbewegung in die Ruhestellung. Beide Male wird durch der Rückhalteabschnitt 1529 bewirkt, dass der Drahtbügel 560 wieder auf der Anschlagfläche des Vorsprungsabschnitts 525 aufliegt. Der Rückhalteabschnitt 1529 hat die Funktion einer seitlichen Begrenzung der Auslenkung des Drahtbügels 560.

Unter Bezugnahme auf die vorstehend beschriebenen Figuren wird nachfolgend ein Ausführungsbeispiel der vorliegenden Erfindung zusammenfassend und mit anderen Worten beschrieben. Das Tastenmodul 110 weist gemäß einem Ausführungsbeispiel ein einstückiges bzw. einteiliges Modulgehäuse 230 und einen einstückigen bzw. einteiligen Tastenstößel 220 auf. In dem Modulgehäuse 230 ist der Gehäuseanschlag 332 für den Tastenstößel 220 ausgeformt. In dem Tastenstößel 220 ist der Fixierabschnitt 521 für den Drahtbügel 560 als eine Aussparung ausgeformt. Der Fixierabschnitt 521 weist ein trapezähnliches Querschnittsprofil auf. Aufgrund der Lagerung des Drahtbügels 560 in den Lagerkerben 671 und 672 können verschiedene Drahtbügel 560 mit unterschiedliche Dicken des Drahtes einfach und zuverlässig fixiert werden. Der Draht des Drahtbügels 560 ist bei der Lagerung in den Lagerkerben 671 und 672 automatisch zentriert und positionsgenau bzw. lagegenau ausgerichtet und zudem sind Ausbrechen und Verdrehen des Drahtbügels 560 so verhindert. Der Drahtbügel 560 kann auch als ein elastisches Mittel bezeichnet werden. Unterschiedliche Dicken des Drahtes des Drahtbügels 560 bewirken ein unterschiedliches Klickgeräusch. Der Drahtbügel 560 ist ausschließlich bzw. vollständig im beweglichen Tastenstößel 220 angeordnet. Die Funktion des Drahtbügels 560 besteht darin, eine taktile Rückkopplung und eine akustische Rückkopplung zu ermöglichen, oder optional lediglich eine taktile Rückkopplung, wobei der zweite gerade Abschnitt 765 des Drahtbügels 560 verkürzt sein kann. Das fixierte Ende 761 des Drahtbügels 560 in dem Fixierabschnitt 521 fungiert als eine Sicherung gegen Herausfallen des Drahtbügels 560 aus dem Fixierabschnitt 521. Dazu zeigt das fixierte Ende 761 zeigt von dem ersten Biegebereich 762 weg in eine Richtung quer zu der Achse Ader Betätigungsbewegung. Das fixierte Ende 761 weist eine scharfe Kante auf, sodass der Drahtbügel 560 sich bei einer Zugbelastung in Richtung aus dem Fixierabschnitt 521 heraus in den Kunststoff des Tastenstößel bzw. des Fixierabschnitts 521 bohrt und sich immer weiter verkeilt. Die Schrägfläche 523 ist als ein Steg bzw. Vorsprung mit schräger Fläche bzw. Abgleitfläche in dem Tastenstößel 220 ausgeformt. Die Schrägfläche 523 erstreckt sich als ein Steg von einem dem Modulgehäuse 230 zugewandten Boden des Tastenstößels 220 bis zu einem zwischen Boden in der Mitte des Tastenstößels 220, wobei sich der Steg zu dem Boden des Tastenstößels 220 hin verjüngt, um die schräge Fläche auszubilden. Die Schrägfläche 523 ist ausgebildet, um den zweiten geraden Abschnitt 764 des Drahtbügels 560 quer zu der Achse A der Betätigungsbewegung auszulenken und an der Nase 535 des Modulgehäuses 230 vorbei zu bewegen, um die akustische Rückkopplung durch Aufschlagen auf der Anschlagfläche 527 des Tastenstößels 220 zu erzeugen. Die Rippe 531 verjüngt sich von der Nase 535 zu einem Boden des Modulgehäuses 230 hin. Die Anlagefläche 533 der Rippe 531 ist ausgebildet, um bei einer Betätigungsbewegung des Tastenstößels 220 zu der Betätigungsposition hin den zweiten geraden Abschnitt 764 des Drahtbügels 560 entlang der Achse A der Betätigungsbewegung in Richtung zu der Schrägfläche 523 auszulenken bzw. vorzuspannen. Die Rippe 531 ist ausgebildet, um den zweiten geraden Abschnitt 764 des Drahtbügels 560 bei einer Betätigungsbewegung des Tastenstößels 220 zu der Ruheposition hin über die Nase 535 zu führen bzw. eine Rückführung über die Anlagefläche 533 zu bewirken. Der Vorsprungsabschnitt 525 und die Anschlagfläche 527 sind ausgebildet, um durch Zusammentreffen bzw. Zusammenstoßen des zweiten geraden Abschnitts 764 des Drahtbügels 560 mit der Anschlagfläche 527 die akustische Rückkopplung zu erzeugen. Die Anschlagfläche 533 ist auch ausgebildet, um als eine Auflagefläche für den zweiten geraden Abschnitt 764 des Drahtbügels 560 in Ruheposition zu fungieren.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Tastatur
- 102: Schaltungssubstrat
- 104: Fixierelement
- 106: Tastenkappe
- 110: Tastenmodul
- 201: Loch
- 203: Kontaktflächen
- 205: elektronische Bauteile
- 207: Halteöffnung
- 220: Tastenstößel
- 230: Modulgehäuse
- 322: Kopplungsabschnitt
- 324: Stößelanschlag
- 326: Mantelabschnitt
- 328: Führungszapfen
- 332: Gehäuseanschlag
- 334: Positioniervorsprung
- 336: Befestigungsabschnitt
- 338: Kragen
- 340: elastisches Mittel
- 350: Auslöseelement
- 352: Anbringungsabschnitt
- 354: Kontaktfinger
- 521: Fixierabschnitt
- 523: Schrägfläche
- 525: Vorsprungsabschnitt
- 527: Anschlagfläche
- 531: Rippe
- 533: Anlagefläche
- 535: Nase
- 560: Drahtbügel
- A: Betätigungsachse bzw. Achse der Betätigungsbewegung
- 671: erste Lagerkerbe
- 672: zweite Lagerkerbe
- 761: fixiertes Ende
- 762: erster Biegebereich
- 763: erster gerader Abschnitt
- 764: zweiter Biegebereich
- 765: zweiter gerader Abschnitt
- 766: freies Ende
- 1000: Verfahren zum Versehen
- 1010: Schritt des Zuführens
- 1020: Schritt des Biegens
- 1030: Schritt des Trennens
- 1040: Schritt des Fixierens
- 1137: Anlagefläche
- 1155: Auflageabschnitt
- 1239: Schrägfläche
- 1529: Rückhalteabschnitt

## Patentansprüche

1. Tastenmodul (110) für eine Tastatur (100), wobei das Tastenmodul (110) folgende Merkmale aufweist:
einen Tastenstößel (220), wobei der Tastenstößel (220) einen Kopplungsabschnitt (322) zum Ankoppeln einer Tastenkappe (106) für das Tastenmodul (110) aufweist;
ein Modulgehäuse (230), wobei das Modulgehäuse (230) ausgeformt ist, um den Tastenstößel (220) bewegbar aufzunehmen, um eine translatorische Betätigungsbewegung des Tastenstößels (220) zwischen einer Ruheposition und einer Betätigungsposition relativ zu dem Modulgehäuse (230) zu ermöglichen; und
einen Drahtbügel (560) zum Bereitstellen einer taktilen und/oder akustischen Rückkopplung, wobei der Drahtbügel (560) im Verlauf der Betätigungsbewegung elastisch auslenkbar ist, wobei der Drahtbügel (560) mit einem Gesamtbiegewinkel von weniger als 360 Grad gebogen ausgeformt ist, wobei der Drahtbügel (560) an dem Tastenstößel (220) fixiert ist, **dadurch gekennzeichnet, dass** der Drahtbügel (560) aus einem Metalldraht oder einem Kunststoffdraht ausgeformt ist, wobei der Drahtbügel (560) einen ersten Biegebereich (762) und einen zweiten Biegebereich (764) aufweist, wobei der Drahtbügel (560) in dem ersten Biegebereich (762) weniger als 180 Grad gebogen ist, wobei der Drahtbügel (560) in dem zweiten Biegebereich (764) zwischen 45 und 135 Grad gebogen ist, wobei der erste Biegebereich (762) zwischen einem an dem Tastenstößel (220) fixierten Ende (761) des Drahtbügels (560) und einem ersten geraden Abschnitt (763) des Drahtbügels (560) angeordnet ist, wobei der zweite Biegebereich (762) zwischen dem ersten geraden Abschnitt (763) und einem zweiten geraden Abschnitt (765) des Drahtbügels (560) angeordnet ist, wobei der zweite gerade Abschnitt (765) länger als der erste gerade Abschnitt (763) ist, wobei der zweite gerade Abschnitt (765) zwischen dem zweiten Biegebereich (764) und einem freien Ende (766) des Drahtbügels (560) angeordnet ist, wobei der zweite gerade Abschnitt (765) und das freie Ende (766) des Drahtbügels (560) im Verlauf der Betätigungsbewegung relativ zu dem ersten geraden Abschnitt (763) elastisch auslenkbar sind.

2. Tastenmodul (110) gemäß Anspruch 1, bei dem der Tastenstößel (220) einen Fixierabschnitt (521) zum Fixieren des Drahtbügels (560) an dem Tastenstö-ßel (220) aufweist, wobei der Fixierabschnitt (521) zwei Lagerkerben (671, 672) zum Lagern des Drahtbügels (560) aufweist, wobei jede der Lagerkerben (671, 672) einen Winkel von weniger als 180 Grad aufspannt.

3. Tastenmodul (110) gemäß einem der vorangegangenen Ansprüche, bei dem der Drahtbügel (560) in einem Teilabschnitt widerhakenartig ausgeformt ist und/oder an einem an dem Tastenstößel (220) fixierten Ende (761) des Drahtbügels (560) eine scharfe Kante aufweist.

4. Tastenmodul (110) gemäß einem der vorangegangenen Ansprüche, bei dem der Tastenstößel (220) eine schräg zu einer Achse (A) der Betätigungsbewegung geneigte Schrägfläche (523) aufweist, wobei das Modulgehäuse (230) eine schräg zu der Achse (A) der Betätigungsbewegung geneigte Rippe (531) mit einer Nase (535) und einer normal zu der Achse (A) der Betätigungsbewegung geneigten Anlagefläche (533) aufweist, wobei die Schrägfläche (523), die Rippe (531), die Anlagefläche (533) und die Nase (535) ausgeformt sind, um den Drahtbügel (560) im Verlauf der Betätigungsbewegung elastisch auszulenken und ruckartig freizugeben.

5. Tastenmodul (110) gemäß einem der vorangegangenen Ansprüche, bei dem der Tastenstößel (220) einen Vorsprungsabschnitt (525) mit einer normal zu einer Achse (A) der Betätigungsbewegung geneigten Anschlagfläche (527) aufweist, wobei die Anschlagfläche (527) und der Drahtbügel (560) ausgeformt und angeordnet sind, um für die akustische und/oder taktile Rückkopplung im Verlauf der Betätigungsbewegung einen Aufprall des Drahtbügels (560) an der Anschlagfläche (527) zu bewirken.

6. Tastenmodul (110) gemäß einem der vorangegangenen Ansprüche, bei dem der Tastenstößel (220) einen Rückhalteabschnitt (1529) zum Rückhalten des Drahtbügels (560) gegen eine Bewegung weg von einer Wand des Tastenstößels (220) und/oder zum Rückhalten des Drahtbügels (560) gegen eine Bewegung quer zu einer Achse (A) der Betätigungsbewegung des Tastenstößels (220) im Verlauf der Betätigungsbewegung aufweist.

7. Tastenmodul (110) gemäß einem der vorangegangenen Ansprüche, bei dem das Modulgehäuse (230) einstückig ausgeformt ist, wobei das Modulgehäuse (230) zumindest einen Positioniervorsprung (334) zum Positionieren des Tastenmoduls (110) an einem Schaltungssubstrat (102) der Tastatur (100) aufweist, wobei das Modulgehäuse (230) zumindest einen Befestigungsabschnitt (336) zum formschlüssigen und/oder kraftschlüssigen Befestigen des Tastenmoduls (110) in der Tastatur (100) aufweist.

8. Tastenmodul (110) gemäß einem der vorangegangenen Ansprüche, bei dem der Tastenstößel (220) zumindest einen Führungsabschnitt (326, 328) zum Führen der translatorischen Betätigungsbewegung des Tastenstößels (220) aufweist, wobei der zumindest eine Führungsabschnitt (326, 328) des Tastenstößels (220) einen Mantelabschnitt (326) des Tastenstößels (220) und/oder einen Führungszapfen (328) aufweist, der ausgeformt ist, um bei der Betätigungsbewegung in eine den Positioniervorsprung (334) aufweisende Ausbuchtung des Modulgehäuses (230) einzutauchen.

9. Tastenmodul (110) gemäß einem der vorangegangenen Ansprüche, bei dem der Tastenstößel (220) zumindest einen Stößelanschlag (324) zum Begrenzen der Betätigungsbewegung aufweist, wobei das Modulgehäuse (230) zumindest einen Gehäuseanschlag (332) zur Anlage gegen den zumindest einen Stößelanschlag (324) des Tastenstößels (220) in die Ruheposition des Tastenstößels (220) aufweist, wobei das Tastenmodul (110) ein elastisches Mittel (340) aufweist, wobei das elastische Mittel (340) ausgebildet ist, um in einem zusammengesetzten Zustand des Tastenmoduls (110) den Tastenstößel (220) in die Ruheposition vorzuspannen.

10. Tastenmodul (110) gemäß einem der vorangegangenen Ansprüche, bei dem der Tastenstößel (220) aus einem lichtdurchlässigen Material oder einem lichtundurchlässigen Material ausgeformt ist, wobei das Modulgehäuse (230) aus einem lichtdurchlässigen Material oder einem lichtundurchlässigen Material ausgeformt ist.

11. Tastenmodul (110) gemäß einem der vorangegangenen Ansprüche, mit einem Auslöseelement (350) zum Auslösen eines Schaltsignals des Tastenmoduls (110) ansprechend auf die Betätigungsbewegung, wobei das Auslöseelement (350) an dem Tastenstößel (220) angebracht ist, wobei das Auslöseelement (350) als ein Kontaktgeber zum elektrischen Kurzschließen von Kontaktflächen (203) des Schaltungssubstrats (102) der Tastatur (100) ausgeführt ist, wobei das Auslöseelement (350) mindestens einen im Verlauf der Betätigungsbewegung elastisch verformbaren Kontaktfinger (354) zum Berühren der Kontaktflächen (203) unter Erzeugung von Reibung und einen Anbringungsabschnitt (352) zum Anbringen des Auslöseelements (350) an dem Tastenstö-ßel (220) aufweist.

12. Tastenmodul (110) gemäß Anspruch 11, bei dem das Modulgehäuse (230) eine Anlagefläche (1531) aufweist, wobei das Auslöseelement (350) in der Ruheposition des Tastenstößels (220) in Anlage gegen die Anlagefläche (1531) angeordnet ist.

13. Tastatur (100), wobei die Tastatur (100) folgende Merkmale aufweist:
zumindest ein Tastenmodul (110) gemäß einem der vorangegangenen Ansprüche; und
das Schaltungssubstrat (102), wobei das zumindest eine Tastenmodul (110) an dem Schaltungssubstrat (102) angeordnet ist.

14. Tastatur (100) gemäß Anspruch 13, bei der das Schaltungssubstrat (102) zumindest ein Loch (201) aufweist, in das der zumindest eine Positioniervorsprung (334) des Modulgehäuses (230) des zumindest einen Tastenmoduls (110) eingebracht ist, und/oder wobei das zumindest eine Tastenmodul (110) und das Schaltungssubstrat (102) ausschließlich formschlüssig und/oder kraftschlüssig miteinander verbunden sind, und/oder wobei an oder in dem Schaltungssubstrat (102) zumindest eine Leuchtdiode (205) zum Beleuchten des zumindest einen Tastenmoduls (110) und/oder weitere elektronische Bauteile (205) und/oder bei einer Betätigung des zumindest einen Tastenmoduls (110) miteinander elektrisch verbindbare Kontaktflächen (203) angeordnet sind.

15. Tastatur (100) gemäß einem der Ansprüche 13 bis 14, mit einem Fixierelement (104) zum Fixieren des zumindest einen Tastenmoduls (110) an dem Schaltungssubstrat (102), wobei das Fixierelement (104) als ein Tastenrahmen zwischen dem Schaltungssubstrat (102) und einem Tastaturoberteil oder als ein Tastaturoberteil ausgeführt ist.

## Claims

1. Key module (110) for a keyboard (100), wherein the key module (110) comprises:
a key tappet (220), wherein the key tappet (220) comprises a coupling portion (322) for coupling to a keycap (106) for the key module (110);
a module housing (230), wherein the module housing (230) is formed to movably accommodate the key tappet (220), in order to enable a translational actuation movement of the key tappet (220) between a rest position and an actuated position relative to the module housing (230); and
a wire bracket (560) for providing tactile and/or acoustic feedback, wherein the wire bracket (560) is elastically deflectable in the course of the actuation movement, wherein the wire bracket (560) is bent with an overall bending angle of less than 360 degrees, wherein the wire bracket (560) is fixed to the key tappet (220), **characterized in that** the wire bracket (560) is formed of metal wire or plastics wire, wherein the wire bracket (560) comprises a first bending region (762) and a second bending region (764), wherein the wire bracket (560) is bent less than 180 degrees in the first bending region (762), wherein the wire bracket (560) is bent between 45 and 135 degrees in the second bending region (764), wherein first bending region (762) is arranged between an end (761) of the wire bracket (560) fixed to the key tappet (220) and a first straight portion (763) of the wire bracket (560), wherein the second bending region (762) is arranged between the first straight portion (763) and a second straight portion (765) of the wire bracket (560), wherein the second straight portion (765) is longer than the first straight portion (763), wherein the second straight portion (765) is arranged between the second bending region (764) and a free end (766) of the wire bracket (560), wherein the second straight portion (765) and the free end (766) of the wire bracket (560) are elastically deflectable relative to the first straight portion (763) in the course of the actuation movement.

2. Key module (110) according to claim 1, wherein the key tappet (220) comprises a fixing portion (521) for fixing the wire bracket (560) to the key tappet (220), wherein the fixing portion (521) comprises two bearing notches (671, 672) for supporting the wire bracket (560), wherein each of the bearing notches (671, 672) has an opening angle of less than 180 degrees.

3. Key module (110) according to one of the preceding claims, wherein the wire bracket (560) is formed like a barbed hook in a subsection and/or has a sharp edge at an end (761) of the wire bracket (560) fixed to the key tappet (220).

4. Key module (110) according to one of the preceding claims, wherein the key tappet (220) comprises an inclined surface (523) obliquely inclined with respect to an axis (A) of the actuation movement, wherein the module housing (230) comprises a rib (531) obliquely inclined with respect to the axis (A) of the actuation movement and having a nose (535) and an abutment surface (533) inclined normally with respect to the axis (A) of the actuation movement, wherein the inclined surface (523), the rib (531), the abutment surface (533) and the nose (535) are formed to elastically deflect and suddenly release the wire bracket (560) in the course of the actuation movement.

5. Key module (110) according to one of the preceding claims, wherein the key tappet (220) comprises a projection portion (525) with a strike surface (527) inclined normally with respect to axis (A) of the actuation movement, wherein the strike surface (527) and the wire bracket (560) are formed and arranged to cause the wire bracket (560) to strike onto the strike surface (527) in the course of the actuation movement for the acoustic and/or tactile feedback.

6. Key module (110) according to one of the preceding claims, wherein the key tappet (220) comprises a retaining portion (1529) for retaining the wire bracket (560) against movement away from a wall of the key tappet (220) and/or for retaining the wire bracket (560) against movement transversal to an axis (A) of the actuation movement of the key tappet (220) in the course of the actuation movement.

7. Key module (110) according to one of the preceding claims, wherein the module housing (230) is integrally formed, wherein the module housing (230) comprises at least one positioning protrusion (334) for positioning the key module (110) on the circuit substrate (102) of the keyboard (100), wherein the module housing (230) comprises at least one mounting portion (336) for mounting key module (110) in the keyboard (100) with positive locking and/or non-positive locking.

8. Key module (110) according to one of the preceding claims, wherein the key tappet (220) comprises at least one guiding portion (326, 328) for guiding the translational actuation movement of the key tappet (220), wherein the at least one guiding portion (326, 328) of the key tappet (220) comprises a surface portion (326) of the key tappet (220) and/or a guiding stud (328) formed to plunge into a bulge of the module housing (230) during the actuation movement, wherein the bulge comprises the positioning protrusion (334).

9. Key module (110) according to one of the preceding claims, wherein the key tappet (220) comprises at least one tappet stop (324) for limiting the actuation movement, wherein the module housing (230) comprises at least one housing stop (332) for abutment against the at least one tappet stop (324) of the key tappet (220) in the rest position of the key tappet (220), wherein the key module (110) comprises elastic means (340), with the elastic means (340) being formed to bias the key tappet (220) into the rest position in an assembled state of the key module (110).

10. Key module (110) according to one of the preceding claims, wherein the key tappet (220) is formed of translucent material or opaque material, wherein the module housing (230) is formed of translucent material or opaque material.

11. Key module (110) according to one of the preceding claims, comprising a trigger element (350) for triggering a switch signal of the key module (110) in response to the actuation movement, wherein the trigger element (350) is attached to the key tappet (220), wherein the trigger element (350) is a contactor for electrically shorting contact pads (203) of the circuit substrate (102) of the keyboard (100), wherein the trigger element (350) comprises at least one contact finger (354) elastically deflectable in the course of the actuation movement for contacting the contact pads (203) while generating friction and an attachment portion (352) for attaching the trigger element (350) to the key tappet (220).

12. Key module (110) according to claim 11, wherein the module housing (230) comprises an abutment surface (1531), wherein the trigger element (350) is arranged so as to abut on the abutment surface (1531) in the rest position of the key tappet (220).

13. Keyboard (100), wherein the keyboard (100) comprises:
at least one key module (110) according to one of the preceding claims; and
the circuit substrate (102), wherein the at least one key module (110) is arranged on the circuit substrate (102).

14. Keyboard (100) according to claim 13, wherein the circuit substrate (102) comprises at least one hole (201) into which the at least one positioning protrusion (334) of the module housing (230) of the at least one key module (110) is introduced, and/or wherein the at least one key module (110) and the circuit substrate (102) are connected to each other exclusively with positive locking and/or non-positive locking, and/or wherein at least one light-emitting diode (205) for illuminating the at least one key module (110) and/or further electronic devices (205) and/or contact pads (203) electrically connected to each other upon actuation of the at least one key module (110) are arranged on or in the circuit substrate (102).

15. Keyboard (100) according to one of claims 13 to 14, comprising a fixing element (104) for fixing the at least one key module (110) to the circuit substrate (102), wherein the fixing element (104) is a keyframe between the circuit substrate (102) and a keyboard top or a keyboard top.

## Revendications

1. Module de touches (110) pour un clavier (100), le module de touches (110) comprenant:
un poussoir de touche (220), dans lequel le poussoir de touche (220) comprend une partie d'accouplement (322) pour l'accouplement à un capuchon de touche (106) pour le module de touches (110) ;
un boîtier de module (230), dans lequel le boîtier de module (230) est formé pour accueillir de manière mobile le poussoir de touche (220), afin de permettre un mouvement d'actionnement par translation du poussoir de touche (220) entre une position de repos et une position actionnée par rapport au boîtier de module (230) ; et
un support de fil (560) pour fournir un retour tactile et/ou acoustique, dans lequel le support de fil (560) est élastiquement déformable au cours du mouvement d'actionnement, dans lequel le support de fil (560) est plié avec un angle de flexion global de moins de 360 degrés, dans lequel le support de fil (560) est fixé au poussoir de clé (220), **caractérisé par le fait que** le support de fil (560) est formé d'un fil métallique ou plastique, dans lequel le support de fil (560) comprend une première zone de pliage (762) et une deuxième zone de pliage (764), dans laquelle le support de fil (560) est plié à moins de 180 degrés dans la première zone de pliage (762), dans laquelle le support de fil (560) est plié entre 45 et 135 degrés dans la deuxième zone de pliage (764), dans laquelle la première région de flexion (762) est disposée entre une extrémité (761) du support de fil (560) fixée au poussoir (220) et une première partie droite (763) du support de fil (560), dans laquelle la deuxième région de flexion (762) est disposée entre la première partie droite (763) et une deuxième partie droite (765) du support de fil (560), dans laquelle la deuxième partie droite (765) est plus longue que la première partie droite (763), la deuxième partie droite (765) est disposée entre la deuxième zone de flexion (764) et une extrémité libre (766) du support de fil (560), la deuxième partie droite (765) et l'extrémité libre (766) du support de fil (560) étant élastiquement déformables par rapport à la première partie droite (763) au cours du mouvement d'actionnement.

2. Module de touches (110) selon la revendication 1, dans lequel le poussoir de touche (220) comprend une partie de fixation (521) pour fixer le support de fil (560) au poussoir de touche (220), dans lequel la partie de fixation (521) comprend deux encoches d'appui (671, 672) pour supporter le support de fil (560), dans lequel chacune des encoches d'appui (671, 672) a un angle d'ouverture de moins de 180 degrés.

3. Module de touches (110) selon l'une des revendications précédentes, dans lequel le support de fil (560) est formé comme un crochet barbelé dans une sous-section et/ou a un bord tranchant à une extrémité (761) du support de fil (560) fixé au poussoir de touche (220).

4. Module de touches (110) selon l'une des revendications précédentes, dans lequel le poussoir de touche (220) comprend une surface inclinée (523) obliquement inclinée par rapport à un axe (A) du mouvement d'actionnement, dans lequel le boîtier du module (230) comprend une nervure (531) obliquement inclinée par rapport à l'axe (A) du mouvement d'actionnement et ayant un nez (535) et une surface de butée (533) inclinée normalement par rapport à l'axe (A) du mouvement d'actionnement, dans lequel la surface inclinée (523), la nervure (531), la surface de butée (533) et le nez (535) sont formés pour dévier élastiquement et libérer soudainement le support de fil (560) au cours du mouvement d'actionnement.

5. Module de touches (110) selon l'une des revendications précédentes, dans lequel le poussoir de touche (220) comprend une partie saillante (525) avec une surface de frappe (527) inclinée normalement par rapport à l'axe (A) du mouvement d'actionnement, dans lequel la surface de frappe (527) et le support de fil métallique (560) sont formés et agencés pour que le support de fil métallique (560) frappe sur la surface de frappe (527) au cours du mouvement d'actionnement pour le retour d'information acoustique et/ou tactile.

6. Module de touches (110) selon l'une des revendications précédentes, dans lequel le poussoir de touche (220) comprend une partie de retenue (1529) pour retenir le support de fil (560) contre un mouvement éloigné d'une paroi du poussoir de touche (220) et/ou pour retenir le support de fil (560) contre un mouvement transversal à un axe (A) du mouvement d'actionnement du poussoir de touche (220) au cours du mouvement d'actionnement.

7. Module de touches (110) selon l'une des revendications précédentes, dans lequel le boîtier de module (230) est formé d'une seule pièce, dans lequel le boîtier de module (230) comprend au moins une protubérance de positionnement (334) pour positionner le module de touches (110) sur le substrat de circuit (102) du clavier (100), dans lequel le boîtier de module (230) comprend au moins une partie de montage (336) pour le montage du module de touches (110) dans le clavier (100) avec un verrouillage positif et/ou un verrouillage non-positif.

8. Module de touches (110) selon l'une des revendications précédentes, dans lequel le poussoir de touches (220) comprend au moins une partie de guidage (326, 328) pour guider le mouvement d'actionnement de translation du poussoir de touches (220), dans lequel la au moins une partie de guidage (326, 328) du poussoir (220) comprend une partie de surface (326) du poussoir (220) et/ou un goujon de guidage (328) formé pour plonger dans un renflement du boîtier du module (230) pendant le mouvement d'actionnement, le renflement comprenant la protubérance de positionnement (334).

9. Module de touches (110) selon l'une des revendications précédentes, dans lequel le poussoir de touche (220) comprend au moins une butée de poussoir (324) pour limiter le mouvement d'actionnement, dans lequel le boîtier de module (230) comprend au moins une butée de boîtier (332) pour buter contre la au moins une butée de poussoir (324) du poussoir de touche (220) dans la position de repos du poussoir de touche (220), dans lequel le module de touches (110) comprend des moyens élastiques (340), les moyens élastiques (340) étant formés pour faire basculer le poussoir de clé (220) dans la position de repos dans un état assemblé du module de clé (110).

10. Module de touches (110) selon l'une des revendications précédentes, dans lequel le poussoir de touche (220) est formé d'un matériau translucide ou opaque, dans lequel le boîtier du module (230) est formé d'un matériau translucide ou opaque.

11. Module de touches (110) selon l'une des revendications précédentes, comprenant un élément de déclenchement (350) pour déclencher un signal de commutation du module de touches (110) en réponse au mouvement d'actionnement, dans lequel l'élément de déclenchement (350) est fixé au poussoir de touche (220), dans lequel l'élément de déclenchement (350) est un contacteur pour court-circuiter électriquement les plages de contact (203) du substrat de circuit (102) du clavier (100), l'élément déclencheur (350) comprend au moins un doigt de contact (354) élastiquement déformable au cours du mouvement d'actionnement pour entrer en contact avec les plages de contact (203) tout en générant un frottement et une partie de fixation (352) pour fixer l'élément déclencheur (350) au poussoir de touche (220).

12. Module de touches (110) selon la revendication 11, dans lequel le boîtier du module (230) comprend une surface de butée (1531), l'élément de déclenchement (350) étant disposé de manière à venir en butée sur la surface de butée (1531) dans la position de repos du poussoir de touche (220).

13. Clavier (100), dans lequel le clavier (100) comprend :
au moins un module de touches (110) selon l'une des revendications précédentes ; et
le substrat de circuit (102), dans lequel l'au moins un module de touches (110) est disposé sur le substrat de circuit (102).

14. Clavier (100) selon la revendication 13, dans lequel le substrat de circuit (102) comprend au moins un trou (201) dans lequel est introduite l'au moins une protubérance de positionnement (334) du boîtier de module (230) du au moins un module de touches (110), et/ou dans lequel le au moins un module de touches (110) et le substrat de circuit (102) sont reliés l'un à l'autre exclusivement par un verrouillage positif et/ou un verrouillage non positif, et/ou dans lequel au moins une diode électroluminescente (205) destinée à éclairer l'au moins un module de touches (110) et/ou d'autres dispositifs électroniques (205) et/ou des plots de contact (203) reliés électriquement les uns aux autres lors de l'actionnement de l'au moins un module de touches (110) sont disposés sur ou dans le support de circuit (102).

15. Clavier (100) selon l'une des revendications 13 à 14, comprenant un élément de fixation (104) pour fixer l'au moins un module de touches (110) au substrat de circuit (102), dans lequel l'élément de fixation (104) est un cadre de clavette entre le substrat de circuit (102) et un dessus de clavier ou une partie supérieure du clavier.
